# EUROPEAN PATENT APPLICATION

(11) **EP 4 808 236 A1**
(43) Date of publication of application: **16.09.2026**
(21) Application number: 24890082.1
(22) Date of filing: 13.06.2024
(51) Int. Cl.: H04W 72/0446

(54) **SIGNAL TRANSMISSION METHOD AND APPARATUS, AND STORAGE MEDIUM**

(30) Priority: 13.11.2023 CN 202311512363
(71) Applicant: ZTE Corporation, Shenzhen, Guangdong 518057 (CN)
(72) Inventor: GOU, Wei, Shenzhen, Guangdong 518057 (CN); HAN, Xianghui, Shenzhen, Guangdong 518057 (CN); KOU, Shuaihua, Shenzhen, Guangdong 518057 (CN); WEI, Xingguang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/099070
(87) International publication number: WO 2025/102713

(57) **Abstract**

Provided are a signal transmission method and apparatus, and a storage medium. The signal transmission method comprises: a device determining a first channel set, the first channel set comprising a plurality of channels to be transmitted, wherein at least two channels to be transmitted among the plurality of channels to be transmitted overlap in a time domain; on the basis of the first channel set, the device determining a second channel set, wherein channels to be transmitted in the second channel set do not overlap in the time domain; and the device transmitting or receiving the channels to be transmitted in the second channel set.

## Description

The present disclosure claims priority to Chinese Patent Application No. 202311512363.9, filed on November 13, 2023, which is hereby incorporated by reference in its entirety.

### TECHNICAL FIELD

The present disclosure relates to the technical field of communications, and in particular, to a signal transmission method and apparatus, and a storage medium.

### BACKGROUND

In order to improve the uplink (UL) coverage, UL latency, and UL capacity of a time division duplexing (TDD) system, sub band full duplex (SBFD) technology has been proposed. Sub band full duplex is a new type of duplex technology that is capable of dividing the uplink and downlink sub bands on a frequency band of a carrier, allowing a base station to have both uplink and downlink resources in more slots, achieving advantages on latency similar to a frequency division duplexing (FDD) system in the TDD system.

In a symbol/slot occupied by a downlink (DL) channel, a UL sub band and a DL sub band are configured. For example, the UL sub band and the DL sub band are configured within a frequency domain range of a DL bandwidth part and a UL bandwidth part.

### SUMMARY

In an aspect, a signal transmission method is provided. The signal transmission method includes:
determining a first channel set, where the first channel set includes a plurality of channels to be transmitted, at least two channels to be transmitted of the plurality of channels to be transmitted overlap in time domain;
determining a second channel set based on the first channel set, where channels to be transmitted of the second channel set do not overlap in time domain; and
transmitting or receiving the channels to be transmitted of the second channel set.

In another aspect, a signal transmission apparatus is provided. The signal transmission apparatus includes:
a processing module, configured to a first channel set, where the first channel set includes a plurality of channels to be transmitted, at least two channels to be transmitted of the plurality of channels to be transmitted overlap in time domain;
the processing module is further configured to determine a second channel set based on the first channel set, where channels to be transmitted of the second channel set do not overlap in time domain; and
a communication module, configured to transmit or receive the channels to be transmitted of the second channel set.

In yet another aspect, a communication apparatus is provided. The communication apparatus includes: a memory and a processor, where the memory is coupled to the processor, the memory is configured to store instructions executable for the processor, and the processor is configured, upon the instructions being executed, to perform the signal transmission method as recited in above-mentioned aspect.

In yet another aspect, a computer-readable storage medium is provided. The computer-readable storage medium stores computer program instructions, when the computer program instructions are executed on a computer (such as a communication apparatus or signal transmission apparatus), the signal transmission method as recited in above-mentioned aspect is implemented.

In yet another aspect, a computer program product is provided. The computer program product includes computer program instructions, when the computer program instructions are executed, the signal transmission method as recited in above-mentioned aspect is implemented.

### BRIEF DESCRIPTION OF THE DRAWINGS

FIG. 1 is a schematic diagram of time-frequency resources according to some embodiments of the present disclosure.
FIG. 2 is another schematic diagram of time-frequency resources according to some embodiments of the present disclosure.
FIG. 3 is yet another schematic diagram of time-frequency resources according to some embodiments of the present disclosure.
FIG. 4 is a schematic diagram of an architecture of a communication system according to some embodiments of the present disclosure.
FIG. 5 is a flowchart of a signal transmission method according to some embodiments of the present disclosure.
FIG. 6 is a schematic diagram of an SBFD sub band configuration based on the "DUD" pattern according to some embodiments of the present disclosure.
FIG. 7 is a schematic diagram of an SBFD sub band configuration based on the "DU" pattern according to some embodiments of the present disclosure.
FIG. 8 is another schematic diagram of an SBFD sub band configuration based on the "DUD" pattern according to some embodiments of the present disclosure.
FIG. 9 is a schematic diagram of a signal transmission apparatus according to some embodiments of the present disclosure.
FIG. 10 is a structural schematic diagram of a communication apparatus according to some embodiments of the present disclosure.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.

In the description of the present disclosure, unless otherwise specified, "/" means an "or" relationship, for example, "A/B" may represent A or B. The "and/or" herein is merely an association relationship for describing associated objects, and used for indicating that there may be three relationships, for example, A and/or B may represent: only A; only B; or both A and B. In addition, "at least one" means a number of one or more, and "plurality" means a number of two or more. The words "first" and "second" do not limit quantity or an execution order, and the words "first" and "second" do not limit that object are different, either.

It should be noted that in the present disclosure, wordings, such as "exemplarily" or "for example" and variations thereof are used to indicate examples, instances, or illustrations. Any embodiment or design solution described in the present disclosure as "exemplarily" or "for example" should not be illustrated as being more preferred or advantageous over other embodiments or design solutions. Specifically, the usage of the wordings such as "exemplary/exemplarily" or "for example" is intended to present related concepts in a concrete way.

In some technologies, for a user equipment (UE), there may be a plurality of overlapping DL channels/signals in time domain configured to be received in a DL slot. However, due to the limitation of UE capability, only one DL channel/signal may usually be received, or a plurality of DL channels/signals that do not overlap with each other in time domain are received. Therefore, a mechanism is needed to determine DL channels/signals received by the UE, to ultimately meet requirements of UE capability.

Similarly, for a UE, there may be a plurality of overlapping UL channels/signals in time domain configured to be transmitted in a UL slot. However, due to the limitation of UE capability, only one UL channel/signal may usually be received, or a plurality of DL channels/signals that do not overlap with each other in time domain are transmitted. Therefore, a mechanism is needed to determine UL channels/signals transmitted by the UE, or to multiplex the plurality of overlapping UL channels/signals in time domain to reduce the transmitted UL channels/signals, to ultimately meet requirements of UE capability.

In order to improve the UL coverage, UL latency, and UL capacity of the TDD system, the sub band full duplex technology has been proposed. In a DL symbol/slot, a UL sub band and a DL sub band are configured. For example, the UL sub band and the DL sub band are configured within a frequency domain range of a DL bandwidth part (BWP) and a UL bandwidth part. The UL sub band and the DL sub band are also known as SBFD sub bands, that is, an SBFD sub band is configured in the DL symbol/slot. This SBFD sub band generally includes a DL sub band and a UL sub band.

For example, in a TDD carrier of 100MHz, 20 consecutive RBs (resource blocks) are configured as a UL sub band in the DL BWP in the DL symbol/slot, and remaining frequency domain resources in the DL BWP are the DL sub band (a gap in frequency domain between the UL sub band and the DL sub band may not be configured), or a DL sub band is also configured in the DL BWP in the DL symbol/slot. In this way, in the DL symbol/slot, the UL sub band is capable of being used for UL transmission, and the DL sub band is capable of being used for DL transmission.

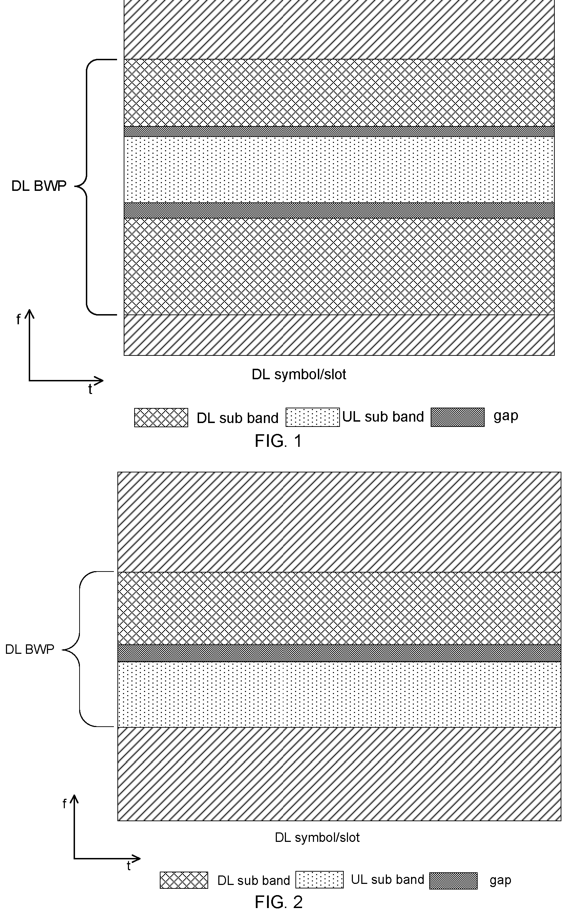

For example, as shown in FIG. 1, one UL sub band and DL sub band are configured in a DL symbol/slot, this structure is generally referred to as "DUD" (a structure based on frequency domain).

As another example, as shown in FIG. 2, one UL sub band and DL sub band are configured in a DL symbol/slot, this structure is generally referred to as "DU"/"UD" (a structure based on frequency domain).

A symbol configured with a SBFD sub band may be referred to as a SBFD symbol. A slot containing a SBFD symbol may be referred to as an SBFD slot. A symbol that is not configured with a SBFD sub band may be referred to as a non-SBFD symbol (i.e., a conventional DL, UL, or flexible F symbol). A slot that does not contain a SBFD symbol may be referred to as a non-SBFD slot.

In a SBFD slot/symbol, for a UE, there may be a situation where UL channels/signals need to be transmitted, while DL channels/signals need to be received simultaneously, and there may be a overlap in time domain between these UL channels/signals, and/or between these DL channels/signals, and/or between these UL channels/signals and these DL channels/signals. For overlapping channels/signals in time domain, due to the limitation of UE capability, UE either performs transmission of UL channels/signals or reception of DL channels/signals. In this way, when the above-mentioned time domain overlap occurs in the SBFD symbol/slot, a rule is needed to determine which channel/signal is received/transmitted, or which non-overlapping channels/signals are received and/or transmitted. The rule should be pre-agreed upon by a base station and UE, so that the base station and UE may have a consistent understanding, to complete a closed-loop transmission and reception.

In the co-frequency co-time full duplex (CCFD) technology, the same time and the same frequency are used to simultaneously transmit and receive wireless signals, doubling the spectral efficiency of wireless communication links.

Configuration of CCFD resources: In a carrier, the base station configures a RB set in the frequency domain based on consecutive RBs for CCFD operations, and configures some slots or symbols in the time domain based on symbols or slots for CCFD operations. In this way, some time-frequency resources (referred to as resource A) for CCFD operations may be obtained. The resource A may also known as a CCFD sub band, which may be used for DL transmission and UL reception. At least from the base station side, the resource A may be used for transmission of the co-frequency co-time full duplex. That is to say, the base station may use the same time and the same frequency to simultaneously transmit DL signals and receive UL signals in resource A. The UE side may only support time-division DL transmission and UL transmission.

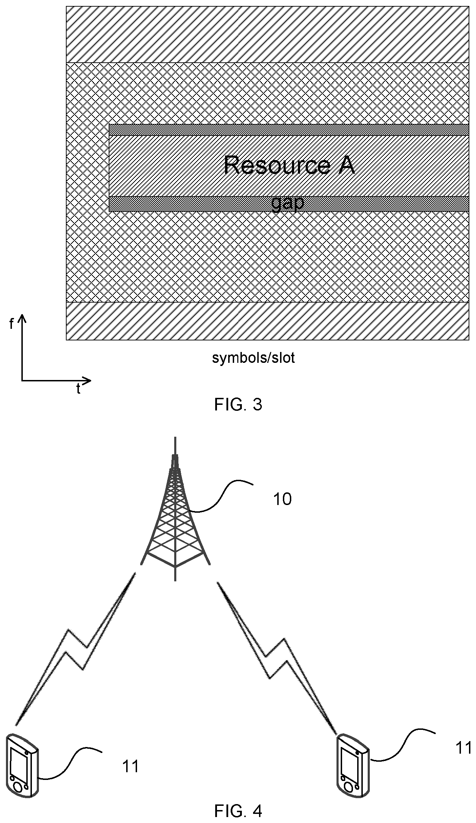

For example, as shown in FIG. 3, a symbol/lot with resource A configured is referred to as a CCFD symbol/lot, and a symbol/lot without resource A configured is referred to as a non-CCFD symbol/lot (e.g., a conventional DL, UL, or F symbol/lot).

At present, there is no solution provided for conflicts between a plurality of transmissions (including various types of DL transmissions in a DL sub band and various types of UL transmissions in a UL sub band) in CCFD symbol/slot or SBFD symbol/slot (i.e., there is a time domain overlap between these DL transmissions and UL transmissions).

In this regard, a signal transmission method is provided in the embodiments of the present disclosure, and the signal transmission method includes: determining a first channel set, where the first channel set includes a plurality of channels to be transmitted, at least two channels to be transmitted of the plurality of channels to be transmitted overlap in time domain; determining a second channel set based on the first channel set, where channels to be transmitted of the second channel set do not overlap in time domain; and transmitting the channels to be transmitted of the second channel set.

In this way, when there are the plurality of channels to be transmitted and at least two of them overlap in the time domain, which channel to be transmitted is received/transmitted is determined, or which non-overlapping channel in the time domain is received and/or transmitted is determined, thus to reduce interference between channels. The rule may be pre-agreed upon by a base station and UE, so that the base station and UE may have a consistent understanding, to complete a closed-loop transmission and reception.

It can be understood that the technical solution provided in the embodiments of the present disclosure is not only applicable to transmission/reception based on SBFD sub bands, but also applicable to transmission/reception based on CCFD sub bands, for example, by replacing a SBFD symbol/slot with a CCFD symbol/slot, and by replacing a non-SBFD symbol/slot with a non-CCFD symbol/slot. Since both DL transmission and UL transmission are supported in a CCFD sub band, a UL sub band or a DL sub band may also be replaced with a CCFD sub band.

Technical solutions provided in the embodiments of the present disclosure can be applied to various communication systems, for example, a new radio (NR) communication system using 5G communication technology, a future evolution system, or a multi-communication convergence system.

Exemplarily, FIG. 4 is a structural schematic diagram of a communication system provided in embodiments of the present disclosure. The communication system may include a base station 10 and one or more terminals 11, and the base station 10 may be in communication connection with the one or more terminals 11.

The base station 10 may be a base station or an evolutional node B (eNB or eNodeB) in long term evolution (LTE), long term evolution advanced (LTEA), a base station device in a 5G network, or a base station in a future communication system, etc. The base station may include various macro base stations, micro base stations, home base stations, wireless remote stations, reconfigurable intelligent surfaces (RISs), routers, relays, transmit receive processor (TRP), wireless fidelity (WIFI) devices, or other network side devices.

The terminal 11 is a device with wireless transceiver functions, which may be deployed on land, including indoors or outdoors, handheld, wearable or vehicle-mounted; may further be deployed on the water surface (such as on ships, etc.); may further be deployed in the air (for example, on airplanes, balloons and satellites, etc.). The terminal may be a mobile phone, a pad, a computer with wireless transceiver functions, a virtual reality (VR) terminal, an augmented reality (AR) terminal, a wireless terminal in the industrial control, a wireless terminal in self driving, a wireless terminal in a remote medical, a wireless terminal in a smart grid, a wireless terminal in transportation safety, a wireless terminal in smart city, a wireless terminal in smart home, etc. The application scenarios are not limited in the embodiments of the present disclosure. A terminal can sometimes be referred to as a terminal device, access terminal, UE (user equipment) unit, UE station, mobile radio station, mobile station, remote station, remote terminal, mobile device, UE terminal, wireless communication device, UE agent, or UE apparatus, or the like.

It should be noted that FIG. 4 is merely an exemplary framework diagram, and a number of devices and names of the various devices included in FIG. 4 are not limited. In addition to devices shown in FIG. 4, the communication system may further include other devices, such as a core network device.

Application scenarios of the embodiments of the present disclosure are not limited. The system architecture and service scenes described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of network architecture and the emergence of new service scenes, the technical solutions provided in the embodiments of the present disclosure are also applicable to similar technical problems.

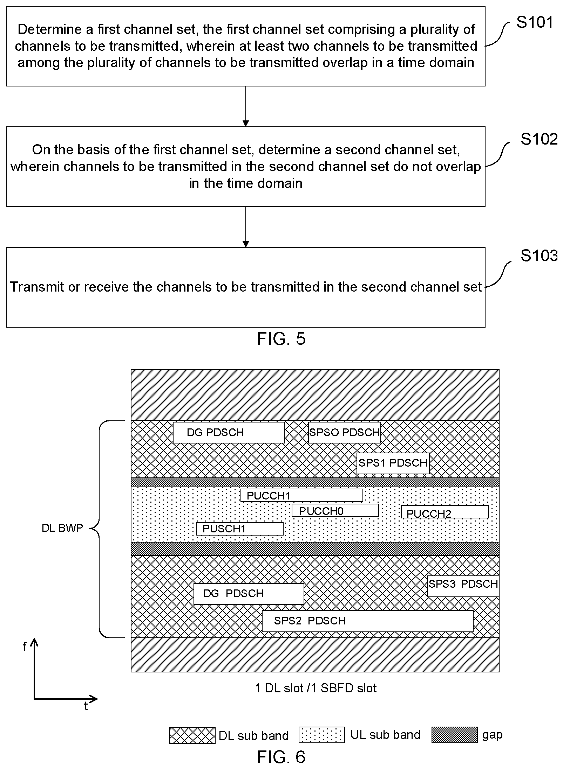

A signal transmission method is provided in the embodiments of the present disclosure, which is suitable for a communication node, and the communication node may be the base station 10 or the terminal 11 in FIG. 4, which is not limited herein. As shown in FIG. 5, the method includes the following S101-103.

In S101, a first channel set is determined, where the first channel set includes a plurality of channels to be transmitted, at least two channels to be transmitted of the plurality of channels to be transmitted overlap in time domain.

In some embodiments, the plurality of channels to be transmitted included in the first channel set are configured in a SBFD slot/symbol, or the plurality of channels to be transmitted included in the first channel set are configured in a CCFD slot/symbol.

In some embodiments, the plurality of channels to be transmitted include at least one uplink channel and/or at least one downlink channel. The at least one uplink channel may and/or may not be provided with a uplink channel for repetition, and at least one downlink channel may and/or may not be provided with a downlink channel for repetition. The at least one uplink channel and/or at least one downlink channel may overlap with each other or overlap partially with each other in time domain.

In some embodiments, a channel to be transmitted includes at least one of the following:
a dynamic grant physical downlink shared channel (PDSCH) with repetition scheduled based on downlink control information (DCI),
a dynamic grant PDSCH without repetition scheduled based on DCI,
a configured grant PDSCH with repetition,
a configured grant PDSCH without repetition,
a physical downlink control channel (PDCCH),
a dynamic grant physical uplink shared channel (PUSCH) with repetition scheduled based on DCI,
a dynamic grant PUSCH without repetition scheduled based on DCI,
a configured grant PUSCH with repetition,
a configured grant PUSCH without repetition,
a physical uplink control channel (PUCCH) with repetition scheduled based on DCI,
a PUCCH without repetition scheduled based on DCI,
a configured grant PUCCH with repetition,
a configured grant PUCCH without repetition,
a physical random access channel (PRACH) with repetition scheduled based on DCI,
a PRACH without repetition scheduled based on DCI,
a PRACH with repetition that is not scheduled based on DCI,
a PRACH without repetition that is not scheduled based on DCI,
a sounding reference signal (SRS),
a plurality of PUSCHs scheduled based on one DCI,
a PUSCH scheduled based on one DCI and transmitted across a plurality of slots,
a plurality of PDSCH scheduled based on one DCI,
a downlink reference signal used for decoding, or
a channel state information reference signal (CSI-RS).

The PUCCH is used to carry uplink control information (UCI) such as hybrid automatic repeat request acknowledgement (HARQ-ACK), channel state information (CSI), and scheduling requests (SR), etc.

CSI-RS is a periodic or semi-persistent CSI-RS.

SRS is a periodic SRS or a semi-persistent SRS.

In S102, a second channel set is determined based on the first channel set, where channels to be transmitted of the second channel set do not overlap in time domain.

In S103, the channels to be transmitted of the second channel set are transmitted or received.

In some embodiments, the first channel set includes a first uplink channel set and a first downlink channel set. The first uplink channel set includes at least one uplink channel, and the first downlink channel set includes at least one downlink channel.

Determining the second channel set based on the first channel set includes the following steps.

Step 1: a second downlink channel set is determined based on the first downlink channel set, where downlink channels of the second downlink channel set do not overlap in time domain.

Step 2: a second uplink channel set is determined based on the first uplink channel set, where uplink channels of the second uplink channel set do not overlap in time domain.

Step 3: the second channel set is determined based on the second uplink channel set and the second downlink channel set.

An order of execution of the above steps may also be: step 2, step 1, and step 3, which is not limited in the present disclosure.

In some embodiments, step 1 may be implemented as: repeatedly performing a second processing operation on the first uplink channel set until a second preset condition is met, to obtain the second uplink channel set.

The second processing operation includes: adding a uplink channel with a highest priority from the first uplink channel set to the second uplink channel set; and deleting the uplink channel with the highest priority and other uplink channels that overlap with the uplink channel with the highest priority in time domain from the first uplink channel set, to obtain an updated first uplink channel set.

In some embodiments, the second preset condition includes: the updated first uplink channel set being an empty set.

In some embodiments, step 2 may be implemented as: repeatedly performing a third processing operation on the first downlink channel set until a third preset condition is met, to obtain the second downlink channel set.

The third processing operation includes: adding a downlink channel with a highest priority from the first downlink channel set to the second downlink channel set; and deleting the downlink channel with the highest priority and other downlink channels that overlap with the downlink channel with the highest priority in time domain from the first downlink channel set, to obtain an updated first downlink channel set.

In some embodiments, the third preset condition includes: the updated first downlink channel set being an empty set.

In some embodiments, step 3 may be implemented as: forming a third channel set consisting of the second uplink channel set and the second downlink channel set, where the third channel set includes at least one channel to be transmitted;
repeatedly performing a fourth processing operation on the third channel set until a fourth preset condition is met, to obtain the second channel set; where the fourth processing operation includes: adding a channel to be transmitted with a highest priority from the third channel set to the second channel set; and deleting the channel to be transmitted with the highest priority and other channels to be transmitted that overlap with the channel to be transmitted with the highest priority in time domain from the third channel set, to obtain an updated third channel set.

In some embodiments, the fourth preset condition includes at least one of the following:
the updated third channel set being an empty set;
a number of channels to be transmitted in the second channel set reaching a preset number;
a frequency of uplink-downlink switches in a slot determined based on the second channel set reaching a preset frequency.

In some embodiments, a priority of a channel to be transmitted is determined based on at least one of:
whether the channel to be transmitted being with repetition;
a transmission direction of the channel to be transmitted;
a channel type of the channel to be transmitted;
a starting symbol of the channel to be transmitted in a slot;
a number of symbols occupied by the channel to be transmitted in a slot; or
a starting slot of the channel to be transmitted with repetition.

In some embodiments, in response to that a gap between an ending symbol of a PDCCH corresponding to a dynamic grant PDSCH and a starting symbol of a configured grant PUSCH is greater than or equal to a preset gap, a priority of the dynamic grant PDSCH is higher than a priority of the configured grant PUSCH; otherwise, the priority of the dynamic grant PDSCH is lower than the priority of the configured grant PUSCH.

In some embodiments, in response to that a gap between an ending symbol of a PDCCH corresponding to a dynamic grant PDSCH and a starting symbol of a semi-persistently scheduled PDSCH is greater than or equal to a preset gap, a priority of the dynamic grant PDSCH is higher than a priority of the semi-persistently scheduled PDSCH; otherwise, the priority of the dynamic grant PDSCH is lower than the priority of the semi-persistently scheduled PDSCH.

In some embodiments, in response to that a gap between an ending symbol of a PDCCH corresponding to a dynamic grant PUSCH and a starting symbol of a semi-persistently scheduled PDSCH is greater than or equal to a preset gap, a priority of the dynamic grant PUSCH is higher than a priority of the semi-persistently scheduled PDSCH; otherwise, the priority of the dynamic grant PUSCH is lower than the priority of the semi-persistently scheduled PDSCH.

In some embodiments, among a plurality of semi-persistently scheduled PDSCHs, a semi-persistently scheduled PDSCH with a smallest index has a highest priority.

Example 1: Assuming that the plurality of channels to be transmitted in an SBFD slot include at least one uplink channel and at least one downlink channel, the first channel set includes a first uplink channel set and a first downlink channel set, the first uplink channel set includes at least one uplink channel, and the first downlink channel set includes at least one downlink channel, then determining the second channel set based on the first channel set includes the following steps.

Step 1: a time domain overlap caused by a downlink channel in the first downlink channel set is addressed, to obtain the second downlink channel set. Step 2: a time domain overlap caused by a uplink channel in the first uplink channel set is addressed, to obtain the second uplink channel set. Step 3: a time domain overlap caused by an uplink channel of the second uplink channel set and a downlink channel of the second downlink channel set, to obtain the second channel set. Uplink channels and/or downlink channels in the second channel set do not overlap in the time domain. An order of execution of the above steps may also be: step 2, step 1, and step 3, which is not limited in the example.

An implementation method for step 1 in Example 1 includes the following steps: step 1-1, addressing a time domain overlap caused by a downlink channel with repetition of the first downlink channel set, to obtain a first sub downlink channel set (so that downlink channels with repetition in the first sub downlink channel set do not overlap in time domain); step 1-2, addressing a time domain overlap caused by a downlink channel without repetition of the first downlink channel set, to obtain a second sub downlink channel set (so that downlink channels without repetition in the second sub downlink channel set do not overlap in the time domain); and step 1-3, addressing a time domain overlap caused by a downlink channel of the first sub downlink channel set and the second sub downlink channel set, to obtain the second downlink channel set. An order of execution of the above steps may also be: step 1-2, step 1-1, and step 1-3, which is not limited in the example.

Step 1-1: Addressing a time domain overlap caused by the downlink channel with repetition in the first downlink channel set includes: based on at least one of a starting slot of a downlink channel with repetition in the first downlink channel set, a starting symbol of the downlink channel with repetition in the slot, and a number of symbols occupied by the downlink channel with repetition in the slot, determining a downlink channel with repetition and with the highest priority among downlink channels with repetition in the first downlink channel set, and adding it to the first sub downlink channel set; then determining other downlink channels that overlap with the downlink channel with repetition and with the highest priority in the time domain. The other downlink channels that overlap with the downlink channel with repetition and with the highest priority in the time domain may be downlink channels with/without repetition. The downlink channel with repetition and with the highest priority and other downlink channels that overlap with the downlink channel with repetition and with the highest priority in the time domain are deleted from the first downlink channel set, to obtain an updated first row channel set; the above operations are repeatedly performed on the first downlink channel set until a number of channels to be transmitted in the determined first sub downlink channel set reaches a preset number and meets a receiving capability of the terminal, in order to obtain the first sub downlink channel set.

Step 1-2: Addressing a time domain overlap caused by the downlink channel without repetition in the first downlink channel set includes: based on at least one of a starting symbol of the downlink channel without repetition in the slot, and a number of symbols occupied by the downlink channel without repetition in the slot, determining a downlink channel without repetition with the highest priority among downlink channels without repetition in the first downlink channel set, and adding it to the second sub downlink channel set; then determining other downlink channels that overlap with the downlink channel without repetition with the highest priority in the time domain. The other downlink channels that overlap with the downlink channel without repetition and with the highest priority in the time domain may be downlink channels with/without repetition. The downlink channel with repetition without the highest priority and other downlink channels that overlap with the downlink channel with repetition without the highest priority in the time domain are deleted from the first downlink channel set, to obtain an updated first row channel set; the above operations are repeatedly performed on the first downlink channel set until a number of channels to be transmitted in the determined second sub downlink channel set reaches a preset number and meets a receiving capability of the terminal, in order to obtain the second sub downlink channel set.

Step 1-3: Addressing a time domain overlap caused by downlink channels in the first sub downlink channel set and second sub downlink channel set to obtain the second downlink channel set includes: obtaining the second downlink channel set according to the method in step 1-1 or step 1-2.

Another implementation method for step 1 in Example 1 is: based on at least one of a starting slot, a starting symbol in the slot, and a number of symbols occupied in the slot for each downlink channel in the first downlink channel set, determining a downlink channel with the highest priority among downlink channels in the first downlink channel set, and adding it to the second downlink channel set; then determining other downlink channels that overlap with the downlink channel with the highest priority in the time domain. The downlink channel with the highest priority and other downlink channels that overlap with the downlink channel with the highest priority in the time domain are deleted from the first downlink channel set, to obtain an updated first downlink channel set; the above operations are repeatedly performed on the first downlink channel set until a number of channels to be transmitted in the determined second downlink channel set reaches a preset number and meets the receiving capability of the terminal, to obtain the second downlink channel set.

Another implementation method for step 1 in Example 1 is: if the first downlink channel set includes a dynamic grant PDSCH (referred to as DG PDSCH) and a semi-persistently scheduled PDSCH (referred to as SPS PDSCH), and the DG PDSCH and the SPS PDSCH overlap in the time domain, and a gap between an ending symbol of a PDCCH corresponding to the DG PDSCH and a starting symbol of the SPS PDSCH is greater than or equal to a preset gap (for example, the preset gap may be 14 symbols), a priority of the DG PDSCH is higher than a priority of the SPS PDSCH, and the DG PDSCH is added to the second downlink channel set; otherwise, the priority of DG PDSCH is lower than the priority of SPS PDSCH, and SPS PDSCH is added to the second downlink channel set.

It can be understood that the above-mentioned three implementation methods for step 1 may be combined and reused. In step 1, in a case where the downlink channels in the first downlink channel set do not overlap with each other in the time domain, or in a case where there is only one downlink channel in the first downlink channel set, the second downlink channel set in step 1 is the first downlink channel set.

Before performing steps 1-1, 1-2, and 1-3, it may be determined based on a pre-agreement between the base station and the terminal whether to exclude downlink channels that overlap with uplink symbols from the first downlink channel set, or whether to exclude downlink channels that overlap with uplink sub bands.

For the downlink channels in the second downlink channel set obtained from the above steps, the downlink channels that overlap with the uplink symbols in the time domain may be deleted, and the downlink channels that overlap with the uplink sub bands may be deleted, that is, neither transmission nor reception is performed.

One implementation method of step 2 in Example 1 includes the following steps: step 2-1, addressing a time domain overlap caused by a uplink control channel with repetition in the first uplink channel set, to obtain a first uplink control channel set; step 2-2, addressing a time domain overlap caused by a uplink control channel without repetition in the first uplink control channel set, to obtain a second uplink control channel set; Step 2-3, addressing a time domain overlap between uplink control channels in the first uplink control channel set and uplink shared channels in the first uplink channel set, to obtain a result A (the result A includes at least one of the following: a PUCCH with repetition, a PUSCH with or without repetition); step 2-4, addressing a time domain overlap between uplink control channels in the second uplink control channel set and uplink shared channels without repetition in the first uplink channel set, to obtain a result B (the result B includes at least one of the following: a PUCCH without repetition, a PUSCH without repetition); step 2-5, taking the result A and the result B as the second uplink channel set. An order of execution of the above steps may also be step 2-2, step 2-1, step 2-3, step 2-4, and 2-5; or step 2-1, step 2-2, step 2-4, step 2-3, step 2-5; or step 2-2, step 2-1, step 2-4, step 2-3, and step 2-5, which is not limited in this example.

Another implementation method for step 2 in Example 1 includes the following steps: step 2-1, addressing a time domain overlap caused by a downlink channel with repetition of the first downlink channel set, to obtain a first sub downlink channel set; step 2-2, addressing a time domain overlap caused by a downlink channel without repetition of the first downlink channel set, to obtain a second sub downlink channel set; and step 2-3, addressing a time domain overlap caused by a downlink channel of the first sub downlink channel set and the second sub downlink channel set, to obtain the second downlink channel set. An order of execution of the above steps may also be: step 2-2, step 2-1, and step 2-3, which is not limited in the example.

An implementation method for step 2-1 is: based on at least one of a starting slot of a uplink channel with repetition in the first uplink channel set, a starting symbol of the uplink channel with repetition in the slot, and a number of symbols occupied by the uplink channel with repetition in the slot, determining a uplink channel with repetition and with the highest priority among uplink channels with repetition in the first uplink channel set, and adding it to the first sub uplink channel set; then determining other uplink channels that overlap with the uplink channel with repetition and with the highest priority in the time domain. The other uplink channels that overlap with the uplink channel with repetition and with the highest priority in the time domain may be uplink channels with/without repetition. The uplink channel with repetition and with the highest priority and other uplink channels that overlap with the uplink channel with repetition and with the highest priority in the time domain are deleted from the first uplink channel set, to obtain an updated first row channel set; the above operations are repeatedly performed on the first uplink channel set until a number of channels to be transmitted in the determined first sub uplink channel set reaches a preset number and meets a receiving capability of the terminal, in order to obtain the first sub uplink channel.

An implementation method for step 2-2 is: based on at least one of a starting symbol of an uplink channel without repetition in a slot, and a number of symbols occupied by the uplink channel without repetition in the slot, determining a uplink channel without repetition with the highest priority among uplink channels without repetition in the first uplink channel set, and adding it to the second sub uplink channel set; then determining other uplink channels that overlap with the uplink channel without repetition with the highest priority in the time domain. The other uplink channels that overlap with the uplink channel without repetition with the highest priority in the time domain may be uplink channels with/without repetition. The uplink channel without repetition with the highest priority and other uplink channels that overlap with the uplink channel without repetition with the highest priority in the time domain are deleted from the first uplink channel set, to obtain an updated first row channel set; the above operations are repeatedly performed on the first uplink channel set until a number of channels to be transmitted in the determined second sub uplink channel set reaches a preset number and meets a receiving capability of the terminal, in order to obtain the second sub uplink channel.

An implementation method for step 2-3 is: referring to the methods in step 1-1 or step 1-2 to obtain the second uplink channel set.

It can be understood that in step 2 of Example 1, in a case where the uplink channels in the first uplink channel set do not overlap with each other in the time domain, or in a case where there is only one uplink channel in the first uplink channel set, the second uplink channel set in step 2 of Example 1 is the first uplink channel set.

Before performing step 2 in Example 1, it may be determined based on a pre-agreement between the base station and the terminal whether to exclude uplink channels that overlap with uplink symbols from the first uplink channel set, or whether to exclude uplink channels that overlap with uplink sub bands.

For the uplink channels in the second uplink channel set obtained in step 2 of Example 1, the uplink channels that overlap with the uplink symbols in the time domain may be deleted, and the uplink channels that overlap with the uplink sub bands may be deleted, that is, neither transmission nor reception is performed.

For the convenience of describing step 3 in Example 1, the second downlink channel set obtained in step 1 and the second uplink channel set obtained in step 2 of Example 1 are referred to as a set Q.

An implementation method for step 3 in Example 1 includes the following steps: step 3-1, based on at least one of a starting slot, a starting symbol in the slot, a number of symbols occupied in the slot, a channel type, a transmission direction, and whether there is repetition for each channel to be transmitted among the channels to be transmitted contained in the set Q, determining a first channel with the highest priority among the channels to be transmitted contained in the set Q, and adding it to the second channel set; step 3-2, determining other channels to be transmitted that overlap with the first channel in the time domain; step 3-3, deleting the first channel and the other channels to be transmitted that overlap with the first channel in the time domain from the set Q, to obtain an updated set Q; step 3-4, repeatedly performing the above operations on the set Q until a frequency of uplink-downlink switches in a slot determined based on the second channel set reaches a preset frequency, to obtain the second channel set.

An implementation method for step 3-1 is: determining a first channel to be transmitted in the set Q that has the earliest starting slot; in a case where there is one first channel to be transmitted, determining that the first channel to be transmitted is a first channel; in a case where there are a plurality of first channels to be transmitted, taking a first channel to be transmitted with the earliest starting symbol among the first channels to be transmitted as a second channel to be transmitted; in a case where a number the second channel to be transmitted is one, determining that the second channel to be transmitted is the first channel; in a case where there are a plurality of second channels to be transmitted, taking a second channel with the highest number of occupied symbols among the second channels to be transmitted as a third channel to be transmitted; in a case where a number the third channel to be transmitted is one, determining that the third channel to be transmitted is the first channel.

In a case where there are a plurality of third channels to be transmitted and only one third channel to be transmitted in the same transmission direction, based on a pre-agreement between a base station and a terminal device, a fourth transmission channel is determined and the fourth transmission channel is taken as the first channel.

Alternatively, in a case where there are a plurality of third channels to be transmitted and a plurality of third channels to be transmitted in the same transmission direction, transmission and reception of any channel should be stopped.

Alternatively, in a case where there are a plurality of third channels to be transmitted, downlink channels among the third channels to be transmitted are dynamic grant PDSCH (DG PDSCH) and uplink channels among the third channels to be transmitted are configured grant PUSCH (CG PUSCH), and a gap between an ending symbol of a PDCCH corresponding to the DG PDSCH and a starting symbol of the CG PUSCH is greater than or equal to a preset gap (e.g., the preset gap may be 14 symbols), a priority of the DG PDSCH is higher than a priority of the CG PUSCH, then the DG PDSCH is taken as the first channel; otherwise, the priority of DG PDSCH is lower than the priority of CG PUSCH, then the CG PUSCH is taken as the first channel. In this way, a conflict problem between DG PDSCH and CG PUSCH in the first channel set can be independently solved.

Alternatively, in a case where there are a plurality of third channels to be transmitted, downlink channels among the third channels to be transmitted are semi-persistently scheduled PDSCH (referred to as SPS PDSCH) and uplink channels among the third channels to be transmitted are dynamic grant PUSCH (referred to as DG PUSCH), and a gap between an ending symbol of a PDCCH corresponding to DG PUSCH and a starting symbol of SPS PDSCH is greater than or equal to a preset gap (for example, the preset gap may be 14 symbols), a priority of DG PUSCH is higher than a priority of SPS PDSCH, then DG PUSCH is taken as the first channel; otherwise, the priority of DG PUSCH is lower than the priority of SPS PDSCH, and SPS PDSCH is taken as the first channel. In this way, a conflict problem between DG PUSCH and SPS PDSCH in the first channel set can be independently solved.

It can be understood that the above steps are only performed when conditions are met. If the conditions are not met, the corresponding processing steps will not be performed.

Another implementation method for step 3-1 is: the base station and terminal pre-agree that a priority of a downlink channel is higher than a priority of an uplink channel, or a priority of a downlink channel is lower than a priority of an uplink channel.

Assuming that the priority of the downlink channel is lower than the priority of the uplink channel, the first channel is determined based on at least one of a starting slot, a starting symbol, and a number of symbols of each uplink channel in the set Q. For example, an uplink channel with the earliest starting slot among all the uplink channels in the set Q is determined, and it is taken as the first channel to be transmitted; in a case where a number of the first channel to be transmitted is one, the first channel to be transmitted is determined as the first channel; in a case where there are a plurality of first channels to be transmitted, a first to be transmitted channel with the earliest starting symbol among the first channels to be transmitted is determined, and it is taken as a second to be transmitted channel; in a case where a number of the second channel to be transmitted is one, the second channel to be transmitted is determined as the first channel; in a case where there are a plurality second channels to be transmitted, a second channel to be transmitted with the largest number of symbols among the second channels to be transmitted is determined, and it is taken as a third channel to be transmitted; in a case where there is only one third channel to be transmitted, the third channel to be transmitted is determined as the first channel; otherwise, any one of the plurality of third channels to be transmitted is selected as the first channel.

Assuming that a priority of a downlink channel is higher than a priority of an uplink channel, the first channel is determined based on at least one of a starting slot, a starting symbol, a number of symbols, and a channel type of each downlink channel among all downlink channels in the set Q. For example, an downlink channel with the earliest starting slot among all the downlink channels in the set Q is determined, and it is taken as the first channel to be transmitted; in a case where a number of the first channel to be transmitted is one, the first channel to be transmitted is determined as the first channel; in a case where there are a plurality of first channels to be transmitted, a first to be transmitted channel with the earliest starting symbol among the first channels to be transmitted is determined, and it is taken as a second to be transmitted channel; in a case where a number of the second channel to be transmitted is one, the second channel to be transmitted is determined as the first channel; in a case where there are a plurality second channels to be transmitted, a second channel to be transmitted with the largest number of symbols among the second channels to be transmitted is determined, and it is taken as a third channel to be transmitted; in a case where a number of the third channel to be transmitted is only one, the third channel to be transmitted is determined as the first channel; in a case where there are a plurality of third channels to be transmitted, if the plurality of third channels to be transmitted are SPS PDSCHs, then a SPS PDSCH with the smallest index is the first channel. If the plurality of obtained third channels to be transmitted are DG PDSCHs, then a PDSCH with the latest or earliest corresponding DCI is the first channel. If the plurality of obtained third channels to be transmitted include a DG PDSCH and an SPS PDSCH, and in a case where a gap between an ending symbol of a PDCCH corresponding to the DG PDSCH and a starting symbol of the SPS PDSCH is greater than or equal to a preset gap (e.g., the preset gap may be 14 symbols), a priority of the DG PDSCH is higher than a priority of the SPS PDSCH, then DG PDSCH is taken as the first channel; otherwise, the priority of the DG PDSCH is lower than the priority of the SPS PDSCH, and the SPS PDSCH is taken as the first channel.

It can be understood that the various steps are only performed when conditions are met. If the conditions are not met, the corresponding processing steps should not be performed.

Another implementation method for step 3-1 is: determining that among the plurality of channels included in the set Q, a downlink channel is a dynamic grant PDSCH (DG PDSCH) and an uplink channel is a configured grant PUSCH (CG PUSCH); in a case where a gap between an ending symbol of a PDCCH corresponding to DG PDSCH and a starting symbol of CG PUSCH is greater than or equal to a preset gap (e.g., the preset gap may be 14 symbols), a priority of DG PDSCH is higher than a priority of CG PUSCH, and DG PDSCH is taken as the first channel; otherwise, the priority of DG PDSCH is lower than the priority of CG PUSCH, then CG PUSCH is taken as the first channel.

Alternatively, among the plurality of channels included in set Q, downlink channels are SPS PDSCHs and uplink channel are DG PUSCHs; in a case where a gap between an ending symbol of a PDCCH corresponding to DG PUSCH and a starting symbol of SPS PDSCH is greater than or equal to a preset gap (e.g., the preset gap may be 14 symbols), a priority of DG PUSCH is higher than a priority of SPS PDSCH, and DG PUSCH is taken as the first channel; otherwise, the priority of the DG PUSCH is lower than the priority of the SPS PDSCH, and the SPS PDSCH is taken as the first channel.

The three above-mentioned implementation methods for step 3-1 may be used in combination, or some of the three implementation methods for step 3-1 may be used in combination.

When the first channel in the three implementation methods for step 3-1 includes at least one uplink channel and downlink channel, the terminal expects an effective gap between the uplink channel and downlink channel, to support switches between them.

If the first channel is a downlink channel, then the downlink channel does not overlap with symbols occupied by an uplink channel in the time domain, or transmission of the downlink channel does not overlap with a sub band of the uplink channel in the time domain or frequency domain. If overlap occurs, the downlink channel may be deleted, that is, the downlink channel may not be used for transmission or reception.

If the first channel is an uplink channel, then the uplink channel does not overlap with symbols occupied by a downlink channel in the time domain, or the uplink channel does not overlap with a sub band of the downlink channel in the time domain or frequency domain. If overlap occurs, the uplink channel may be deleted, that is, the uplink channel may not be used for transmission or reception.

In some embodiments, determining the second channel set based on the first channel set includes: repeatedly performing a first processing operation on the first channel set until a first preset condition is met, to obtain the second channel set; where the first processing operation includes: adding a channel to be transmitted with a highest priority from the first channel set to the second channel set; and deleting the channel to be transmitted with the highest priority and other channels to be transmitted of the first channel set that overlap with the channel to be transmitted with the highest priority in time domain from the first channel set, to obtain an updated first channel set.

In some embodiments, the first preset condition includes: the updated first channel set being an empty set; a number of channels to be transmitted in the second channel set reaching a preset number; a frequency of uplink-downlink switches in a slot determined based on the second channel set reaching a preset frequency.

In some embodiments, a priority of a channel to be transmitted is determined based on at least one of:
the channel to be transmitted being with repetition;
a transmission direction of the channel to be transmitted;
a channel type of the channel to be transmitted;
a starting symbol of the channel to be transmitted in a slot;
a number of symbols occupied by the channel to be transmitted in a slot; or
a starting slot of the channel to be transmitted with repetition.

In some embodiments, in response to that a gap between an ending symbol of a PDCCH corresponding to a dynamic grant PDSCH and a starting symbol of a configured grant PUSCH is greater than or equal to a preset gap, a priority of the dynamic grant PDSCH is higher than a priority of the configured grant PUSCH; otherwise, the priority of the dynamic grant PDSCH is lower than the priority of the configured grant PUSCH.

In some embodiments, in response to that a gap between an ending symbol of a PDCCH corresponding to a dynamic grant PDSCH and a starting symbol of a semi-persistently scheduled PDSCH is greater than or equal to a preset gap, a priority of the dynamic grant PDSCH is higher than a priority of the semi-persistently scheduled PDSCH; otherwise, the priority of the dynamic grant PDSCH is lower than the priority of the semi-persistently scheduled PDSCH.

In some embodiments, in response to that a gap between an ending symbol of a PDCCH corresponding to a dynamic grant PUSCH and a starting symbol of a semi-persistently scheduled PDSCH is greater than or equal to a preset gap, a priority of the dynamic grant PUSCH is higher than a priority of the semi-persistently scheduled PDSCH; otherwise, the priority of the dynamic grant PUSCH is lower than the priority of the semi-persistently scheduled PDSCH.

In some embodiments, among a plurality of semi-persistently scheduled PDSCHs, a semi-persistently scheduled PDSCH with a smallest index has a highest priority.

Example 2: Recording an uplink channel and a downlink channel in an SBFD slot as set Q'.

In set Q', based on a pre-agreement between the base station and the terminal, whether to exclude uplink channels that overlap with the occupied symbols of the downlink channel in set Q', or whether to exclude uplink channels that overlap with the occupied sub bands of the downlink channel in set Q ', to obtain the set Q.

Alternatively, in set Q', based on a pre-agreement between the base station and the terminal, whether to exclude downlink channels that overlap with the occupied symbols of the uplink channel in set Q', or whether to exclude downlink channels that overlap with the occupied sub bands of the uplink channel in set Q ', to obtain the set Q.

Step 1, based on at least one of a starting symbol in a slot, a number of symbols occupied in the slot, a channel type, a transmission direction, and whether there is repetition for each channel to be transmitted in the set Q, the first channel with the highest priority is determined from channels to be transmitted in the set Q, and it is added to the second channel set; step 2, other channels to be transmitted that overlap with the first channel in the time domain are determined; step 3, the first channel and other channels to be transmitted that overlap with the first channel in the time domain are deleted from set Q to obtain an updated set Q; step 4, the above operations are repeatedly performed on set Q until a frequency of uplink-downlink switches in a slot determined based on the second channel set reaches a preset frequency, and to obtain the second channel set.

An implementation method for step 1 in Example 2 is: determining a first channel to be transmitted with the earliest starting symbol in set Q; in a case where there is one first channel to be transmitted, determining that the first channel to be transmitted is the first channel; in a case where there are a plurality of first channels to be transmitted, the first channel with the highest number of occupied symbols in the first channels to be transmitted is taken as a second channel to be transmitted; in a case where a number the second channel to be transmitted is one, determining that the second channel to be transmitted is the first channel.

In a case where there are a plurality of second channels to be transmitted and only one second channel to be transmitted in the same transmission direction, based on a pre-agreement between a base station and a terminal device, a third channel to be transmitted is determined and the t third channel to be transmitted is taken as the first channel.

In a case where there are a plurality of second channel to be transmitted and a plurality of second channels to be transmitted in the same transmission direction, transmission and reception of any channel should be stopped.

In a case where there are a plurality of second channels to be transmitted, and the downlink channel among the second channels to be transmitted is a dynamic grant PDSCH and the uplink channel is a configured grant PUSCH, and a gap between an ending symbol of a PDCCH corresponding to the dynamic grant PDSCH and a starting symbol of the configured grant PUSCH is greater than or equal to a preset gap (e.g., the preset gap may be 14 symbols), a priority of the dynamic grant PDSCH is higher than a priority of the configured grant PUSCH, then the dynamic grant PDSCH may be taken as the first channel; otherwise, the priority of the dynamic grant PDSCH based is lower than the priority of the configured grant PUSCH, and the configured grant PUSCH is taken as the first channel. In this way, a conflict problem between DG PDSCH and CG PUSCH in the first channel set can be independently solved.

In a case where there are a plurality of second channels to be transmitted , where downlink channels of the second channels to be transmitted are semi-persistently scheduled PDSCHs and uplink channels are dynamic grant PUSCHs, and a gap between a ending symbol of a PDCCH corresponding to a dynamic grant PUSCH and a starting symbol of a semi-persistently scheduled PDSCH is greater than or equal to a preset gap (e.g., the preset gap may be 14 symbols), then a priority of the dynamic grant PUSCH is higher than a priority of the semi-persistently scheduled PDSCH, and the dynamic grant PUSCH is taken as the first channel; otherwise, the priority of dynamic grant PUSCH is lower than the priority of the semi-persistently scheduled PDSCH, and the semi-persistently scheduled PDSCH may be taken as the first channel. In this way, a conflict problem between DG PUSCH and SPS PDSCH in the first channel set can be independently solved.

It can be understood that the above steps are only performed when conditions are met. If the conditions are not met, the corresponding processings should not be performed.

Another implementation method for step 1 in Example 2 is: the base station and terminal pre-agree that a priority of a downlink channel is higher than a priority of an uplink channel, or a priority of a downlink channel is lower than a priority of an uplink channel.

Assuming that the priority of the downlink channel is lower than the priority of the uplink channel, the first channel is determined based on at least one of a starting slot, a starting symbol, and a number of symbols of each uplink channel in the set Q. For example, an uplink channel with the earliest starting slot among all the uplink channels in the set Q is determined, and it is taken as the first channel to be transmitted; in a case where a number of the first channel to be transmitted is one, the first channel to be transmitted is determined as the first channel; in a case where there are a plurality of first channels to be transmitted, a first to be transmitted channel with the earliest starting symbol among the first channels to be transmitted is determined, and it is taken as a second to be transmitted channel; in a case where a number of the second channel to be transmitted is one, the second channel to be transmitted is determined as the first channel; in a case where there are a plurality second channels to be transmitted, a second channel to be transmitted with the largest number of symbols among the second channels to be transmitted is determined, and it is taken as a third channel to be transmitted; in a case where there is only one third channel to be transmitted, the third channel to be transmitted is determined as the first channel; otherwise, any one of the plurality of third channels to be transmitted is selected as the first channel.

Assuming that a priority of a downlink channel is higher than a priority of an uplink channel, the first channel is determined based on at least one of a starting slot, a starting symbol, a number of symbols, and a channel type of each downlink channel among all downlink channels in the set Q. For example, an downlink channel with the earliest starting slot among all the downlink channels in the set Q is determined, and it is taken as the first channel to be transmitted; in a case where a number of the first channel to be transmitted is one, the first channel to be transmitted is determined as the first channel; in a case where there are a plurality of first channels to be transmitted, a first to be transmitted channel with the earliest starting symbol among the first channels to be transmitted is determined, and it is taken as a second to be transmitted channel; in a case where a number of the second channel to be transmitted is one, the second channel to be transmitted is determined as the first channel; in a case where there are a plurality second channels to be transmitted, a second channel to be transmitted with the largest number of symbols among the second channels to be transmitted is determined, and it is taken as a third channel to be transmitted; in a case where a number of the third channel to be transmitted is only one, the third channel to be transmitted is determined as the first channel; in a case where there are a plurality of third channels to be transmitted, if the plurality of third channels to be transmitted are SPS PDSCHs, then a SPS PDSCH with the smallest index is a channel to be transmitted of the second channel set. If the plurality of obtained third channels to be transmitted are DG PDSCHs, then a PDSCH with the latest or earliest corresponding DCI is the first channel. If the plurality of obtained third channels to be transmitted include a DG PDSCH and an SPS PDSCH, and based on a case where a gap between an ending symbol of a PDCCH corresponding to the DG PDSCH and a starting symbol of the SPS PDSCH is greater than or equal to a preset gap (e.g., the preset gap may be 14 symbols), a priority of the DG PDSCH is higher than a priority of the SPS PDSCH, then DG PDSCH is taken as the first channel; otherwise, the priority of the DG PDSCH is lower than the priority of the SPS PDSCH, and the SPS PDSCH is taken as the first channel.

It can be understood that the various steps are only performed when conditions are met. If the conditions are not met, the corresponding processing steps should not be performed.

Another implementation method for step 1 in Example 2 is: determining that among the plurality of channels included in the set Q, downlink channels are DG PDSCHs and uplink channels are CG PUSCHs; in a case where a gap between an ending symbol of a PDCCH corresponding to DG PDSCH and a starting symbol of CG PUSCH is greater than or equal to a preset gap (e.g., the preset gap may be 14 symbols), a priority of DG PDSCH is higher than a priority of CG PUSCH, and DG PDSCH is taken as the first channel; otherwise, the priority of DG PDSCH is lower than the priority of CG PUSCH, then CG PUSCH is taken as the first channel.

Alternatively, among the plurality of channels included in set Q, downlink channels are SPS PDSCHs and uplink channel are DG PUSCHs; in a case where a gap between an ending symbol of a PDCCH corresponding to DG PUSCH and a starting symbol of SPS PDSCH is greater than or equal to a preset gap (e.g., the preset gap may be 14 symbols), a priority of DG PUSCH is higher than a priority of SPS PDSCH, and DG PUSCH is taken as the first channel; otherwise, the priority of the DG PUSCH is lower than the priority of the SPS PDSCH, and the SPS PDSCH is taken as the first channel.

The three above-mentioned implementation methods for step 1 in Example 2 may be used in combination, or some of the three implementation methods for step 1 in Example 2 may be used in combination.

When the first channel in the steps in Example 2 includes at least one uplink channel and downlink channel, the terminal expects an effective gap between the uplink channel and downlink channel, to support switches between them.

In Example 2, if the first channel is a downlink channel, then the downlink channel should not overlap with symbols occupied by an uplink channel in the time domain, or the downlink channel does not overlap with a sub band of the uplink channel in the time domain or frequency domain. If overlap occurs, the downlink channel may be deleted, that is, the downlink channel may not be used for transmission or reception.

If the first channel is a uplink channel, then the uplink channel should not overlap with symbols occupied by an downlink channel in the time domain, or the uplink channel should not overlap with a sub band of the downlink channel in the time domain or frequency domain. If overlap occurs, the uplink channel may be deleted, that is, the uplink channel may not be used for transmission or reception.

Example 2: Recording an uplink channel and a downlink channel in an SBFD slot as set Q'.

In set Q', based on a pre-agreement between the base station and the terminal, whether to exclude uplink channels that overlap with the occupied symbols of the downlink channel in set Q', or whether to exclude uplink channels that overlap with the occupied sub bands of the downlink channel in set Q ', to obtain the set Q.

Alternatively, in set Q', based on a pre-agreement between the base station and the terminal, whether to exclude downlink channels that overlap with the occupied symbols of the uplink channel in set Q', or whether to exclude downlink channels that overlap with the occupied sub bands of the uplink channel in set Q ', to obtain the set Q.

Step 1, based on at least one of a starting slot, a starting symbol in a slot, a number of symbols occupied in the slot, a channel type, a transmission direction, and whether there is repetition for each channel to be transmitted in the set Q, the first channel with the highest priority is determined from channels to be transmitted in the set Q, and it is added to the second channel set; step 2, other channels to be transmitted that overlap with the first channel in the time domain are determined; step 3, the first channel and other channels to be transmitted that overlap with the first channel in the time domain are deleted from set Q to obtain an updated set Q; step 4, the above operations are repeatedly performed on set Q until a frequency of uplink-downlink switches in a slot determined based on the second channel set reaches a preset frequency, and to obtain the second channel set.

An implementation method for step 1 in Example 3 is: determining a first channel to be transmitted with the earliest starting slot in set Q; in a case where a number of the first channel to be transmitted is one, the first channel to be transmitted is determined as the first channel; in a case where there are a plurality of first channels to be transmitted, a first to be transmitted channel with the earliest starting symbol among the first channels to be transmitted is taken as a second to be transmitted channel; in a case where a number of the second channel to be transmitted is one, the second channel to be transmitted is determined as the first channel; in a case where there are a plurality of second channels to be transmitted, a second channel to be transmitted with the highest number of occupied symbols in the second channels to be transmitted is taken as a third channel to be transmitted; in a case where a number of the third channel to be transmitted is only one, the third channel to be transmitted is determined as the first channel.

In a case where there are a plurality of third channels to be transmitted and only one third channel to be transmitted in the same transmission direction, based on a pre-agreement between a base station and a terminal device, a fourth transmission channel is determined and the fourth transmission channel is taken as the first channel.

In a case where there are a plurality of third channels to be transmitted and a plurality of third channels to be transmitted in the same transmission direction, transmission and reception of any channel should be stopped.

In a case where there are a plurality of third channels to be transmitted, and the downlink channel among the third channels to be transmitted is a dynamic grant PDSCH and the uplink channel is a configured grant PUSCH, and in a case where a gap between an ending symbol of a PDCCH corresponding to the dynamic grant PDSCH and a starting symbol of the configured grant PUSCH is greater than or equal to a preset gap (e.g., the preset gap may be 14 symbols), a priority of the dynamic grant PDSCH is higher than a priority of the configured grant PUSCH, then the dynamic grant PDSCH may be taken as the first channel; otherwise, the priority of the dynamic grant PDSCH based is lower than the priority of the configured grant PUSCH, and the configured grant PUSCH is taken as the first channel. In this way, a conflict problem between DG PDSCH and CG PUSCH in the first channel set can be independently solved.

In a case where there are a plurality of third channels to be transmitted, where downlink channels of the third channels to be transmitted are semi-persistently scheduled PDSCHs and uplink channels are dynamic grant PUSCHs, and in a case where a gap between a ending symbol of a PDCCH corresponding to a dynamic grant PUSCH and a starting symbol of a semi-persistently scheduled PDSCH is greater than or equal to a preset gap (e.g., the preset gap may be 14 symbols), then a priority of the dynamic grant PUSCH is higher than a priority of the semi-persistently scheduled PDSCH, and the dynamic grant PUSCH is taken as the first channel; otherwise, the priority of dynamic grant PUSCH is lower than the priority of the semi-persistently scheduled PDSCH, and the semi-persistently scheduled PDSCH may be taken as the first channel. In this way, a conflict problem between DG PUSCH and SPS PDSCH in the first channel set can be independently solved.

It can be understood that the above steps are only performed when conditions are met. If the conditions are not met, the corresponding processings should not be performed.

Another implementation method for step 1 in Example 3 is: the base station and terminal pre-agree that a priority of a downlink channel is higher than a priority of an uplink channel, or a priority of a downlink channel is lower than a priority of an uplink channel.

Assuming that the priority of the downlink channel is lower than the priority of the uplink channel, the first channel is determined based on at least one of a starting slot, a starting symbol, and a number of symbols of each uplink channel in the set Q. For example, an uplink channel with the earliest starting slot among all the uplink channels in the set Q is determined, and it is taken as the first channel to be transmitted; in a case where a number of the first channel to be transmitted is one, the first channel to be transmitted is determined as the first channel; in a case where there are a plurality of first channels to be transmitted, a first to be transmitted channel with the earliest starting symbol among the first channels to be transmitted is determined, and it is taken as a second to be transmitted channel; in a case where a number of the second channel to be transmitted is one, the second channel to be transmitted is determined as the first channel; in a case where there are a plurality second channels to be transmitted, a second channel to be transmitted with the largest number of symbols among the second channels to be transmitted is determined, and it is taken as a third channel to be transmitted; in a case where there is only one third channel to be transmitted, the third channel to be transmitted is determined as the first channel; otherwise, any one of the plurality of third channels to be transmitted is selected as the first channel.

Assuming that a priority of a downlink channel is higher than a priority of an uplink channel, the first channel is determined based on at least one of a starting slot, a starting symbol, a number of symbols, and a channel type of each downlink channel among all downlink channels in the set Q. For example, an downlink channel with the earliest starting slot among all the downlink channels in the set Q is determined, and it is taken as the first channel to be transmitted; in a case where a number of the first channel to be transmitted is one, the first channel to be transmitted is determined as the first channel; in a case where there are a plurality of first channels to be transmitted, a first to be transmitted channel with the earliest starting symbol among the first channels to be transmitted is determined, and it is taken as a second to be transmitted channel; in a case where a number of the second channel to be transmitted is one, the second channel to be transmitted is determined as the first channel; in a case where there are a plurality second channels to be transmitted, a second channel to be transmitted with the largest number of symbols among the second channels to be transmitted is determined, and it is taken as a third channel to be transmitted; in a case where a number of the third channel to be transmitted is only one, the third channel to be transmitted is determined as the first channel.

In a case where there are a plurality of third channels to be transmitted, if the plurality of third channels to be transmitted are SPS PDSCHs, then a SPS PDSCH with the smallest index is a channel to be transmitted of the second channel set. If the plurality of obtained third channels to be transmitted are DG PDSCHs, then a PDSCH with the latest or earliest corresponding DCI is the first channel. If the plurality of obtained third channels to be transmitted include a DG PDSCH and an SPS PDSCH, and in a case where a gap between an ending symbol of a PDCCH corresponding to the DG PDSCH and a starting symbol of the SPS PDSCH is greater than or equal to a preset gap (e.g., the preset gap may be 14 symbols), a priority of the DG PDSCH is higher than a priority of the SPS PDSCH, then DG PDSCH is taken as the first channel; otherwise, the priority of the DG PDSCH is lower than the priority of the SPS PDSCH, and the SPS PDSCH is taken as the first channel.

It can be understood that the various steps are only performed when conditions are met. If the conditions are not met, the corresponding processing steps should not be performed.

Another implementation method for step 1 in Example 3 is: determining that among the plurality of channels included in the set Q, downlink channels are DG PDSCHs and uplink channels are CG PUSCHs; in a case where a gap between an ending symbol of a PDCCH corresponding to DG PDSCH and a starting symbol of CG PUSCH is greater than or equal to a preset gap (e.g., the preset gap may be 14 symbols), a priority of DG PDSCH is higher than a priority of CG PUSCH, and DG PDSCH is taken as the first channel; otherwise, the priority of DG PDSCH is lower than the priority of CG PUSCH, then CG PUSCH is taken as the first channel.

Alternatively, among the plurality of channels included in set Q, downlink channels are SPS PDSCHs and uplink channel are DG PUSCHs; in a case where a gap between an ending symbol of a PDCCH corresponding to dynamic grant PUSCH and a starting symbol of SPS PDSCH is greater than or equal to a preset gap (e.g., the preset gap may be 14 symbols), a priority of DG PUSCH is higher than a priority of SPS PDSCH, and DG PUSCH is taken as the first channel; otherwise, the priority of the DG PUSCH is lower than the priority of the SPS PDSCH, and the SPS PDSCH is taken as the first channel.

The three above-mentioned implementation methods for step 1 in Example 3 may be used in combination, or some of the three implementation methods for step 1 in Example 3 may be used in combination.

When the first channel in the steps in Example 3 includes at least one uplink channel and downlink channel, the terminal expects an effective gap between the uplink channel and downlink channel, to support switches between them.

If the first channel is a downlink channel, then the downlink channel should not overlap with symbols occupied by an uplink channel in the time domain, or the downlink channel does not overlap with a sub band of the uplink channel in the time domain or frequency domain. If overlap occurs, the downlink channel may be deleted, that is, the downlink channel may not be used for transmission or reception.

If the first channel is a uplink channel, then the uplink channel should not overlap with symbols occupied by an downlink channel in the time domain, or the uplink channel should not overlap with a sub band of the downlink channel in the time domain or frequency domain. If overlap occurs, the uplink channel may be deleted, that is, the uplink channel may not be used for transmission or reception.

In S103, the channels to be transmitted of the second channel set are transmitted.

In some embodiments, in response to that there are a plurality of channels to be transmitted with a same priority and overlapping in time domain in the first channel set, transmitting the plurality of channels to be transmitted with the same priority and overlapping in time domain is stopped.

Based on this, the second channel set is determined based on the first channel set; where the first channel set includes a plurality of channels to be transmitted, and at least two channels to be transmitted of the plurality of channels to be transmitted overlap in the time domain, while channels to be transmitted of the second channel set do not overlap in the time domain. In this way, the problem of conflicts between the plurality of channels to be transmitted under the limitation of the capability of the terminal device is addressed, reducing interference between channels.

In order to provide a more detailed explanation of the technical solutions of the present disclosure, some implementations are provided below.

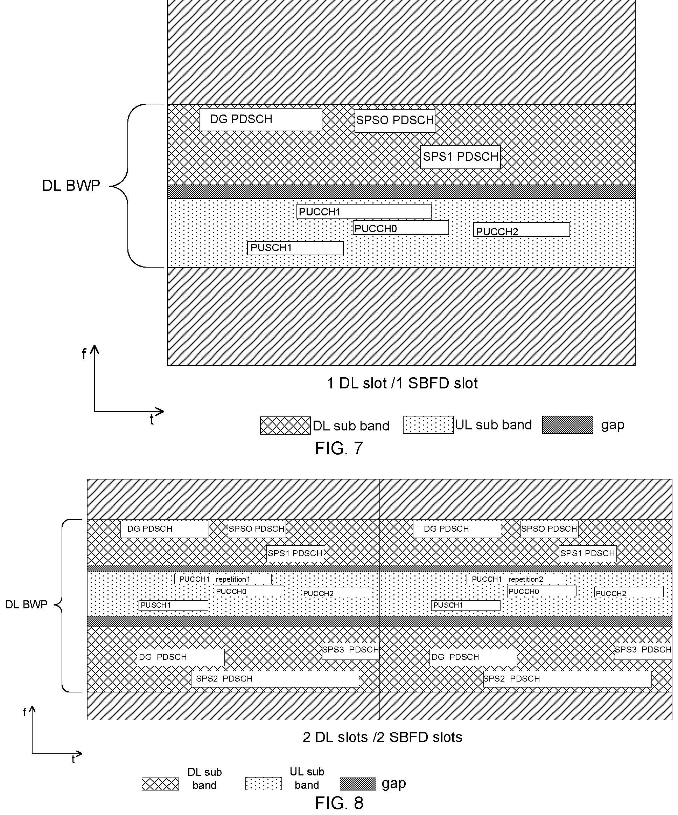

FIG. 6 provides an SBFD sub band configuration based on the "DUD" pattern. DL transmission (for downlink channel) and UL transmission (for uplink channel) in FIG. 6 do not have repetition transmission, which means that these DL transmission and UL transmission are completed in this SBFD slot. FIG. 7 provides an SBFD sub band configuration based on the "DU" pattern. DL transmission and UL transmission in FIG. 7 do not have repetition transmission, which means that these DL transmission and UL transmission are completed in this SBFD slot. FIG. 8 provides another SBFD sub band configuration based on the "DUD" pattern. The DL transmission and UL transmission in FIG. 8 include or do not include repetition transmission, where (the DL/UL) transmission with repetition transmission may have a earlier starting slot.

Assuming that in a DL slot or SBFD symbol set configured with an SBFD sub band, i.e., in an SBFD slot/symbol, one or more DL transmissions are configured/scheduled (in the DL sub band) for a UE, and these DL transmissions may be DL transmissions with repetition and/or without repetition. Meanwhile, in the SBFD slot, one or more UL transmissions are configured/scheduled (in a UL sub band), and these UL transmissions may be UL transmissions with repetition and/or without repetition. In these DL and UL transmissions, some time domain overlaps may occur, for example, all or a portion of the DL transmissions overlap in the time domain, or all or a portion of the UL transmissions overlap in the domain overlap, or one or more of the DL transmissions and one or more of the UL transmissions overlap in the time domain.

Considering that the UE may not have a capability to perform both UL transmission and DL transmission simultaneously or the UE may not have a capability to perform ta plurality of UL transmissions or DL transmissions. Thus, based on a case of scheduling and configuring the DL transmissions and UL transmissions mentioned above, the base station and UE agree to determine the final UL transmission and/or DL transmission to be performed (or referred to as surviving UL transmission and/or DL transmission) according to following rules, and the remaining UL and/or DL transmissions may not be performed. The final (or surviving) UL transmission is the UL transmission that the UE needs to send (if there is a UL signal to transmit for the UE), which corresponds to the UL transmission that the base station needs to receive. The final (or surviving) DL transmission is the DL transmission that the base station needs to send (if there is a DL signal to transmit for the base station), which corresponds to the DL transmission that the UE needs to receive.

The base station uses the following rules to determine the DL transmission to be sent or the UL transmission to be received, and correspondingly, the UE uses the following rules to determine the corresponding DL transmission to be received or UL transmission to be sent.

The DL transmission and UL transmission have the same physical layer priority.

The DL transmission and UL transmission include at least one of the following:
a dynamic grant PDSCH with repetition scheduled based on DCI,
a dynamic grant PDSCH without repetition scheduled based on DCI,
a configured grant PDSCH with repetition,
a configured grant PDSCH without repetition,
PDCCH,
a dynamic grant PUSCH with repetition scheduled based on DCI,
a dynamic grant PUSCH without repetition scheduled based on DCI,
a configured grant PUSCH with repetition,
a configured grant PUSCH without repetition,
a PUCCH with repetition scheduled based on DCI,
a PUCCH without repetition scheduled based on DCI,
a configured grant PUCCH with repetition,
a configured grant PUCCH without repetition,
a PRACH with repetition scheduled based on DCI,
a PRACH without repetition scheduled based on DCI,
a PRACH with repetition that is not scheduled based on DCI,
a PRACH without repetition that is not scheduled based on DCI,
SRS,
a plurality of PUSCHs scheduled based on one DCI,
a PUSCH scheduled based on one DCI and transmitted across a plurality of slots,
a plurality of PDSCH transmissions scheduled based on one DCI,
a downlink reference signal used for decoding, or
CSI-RS.

The PUCCH is used to carry UCI such as HARQ-ACK, CSI, and SR.

The CSI-RS is a periodic or semi-persistent CSI-RS.

### Rule 1:

A basic idea is: first addressing a time domain overlap caused by the plurality of channels in the same transmission direction, and then addressing a time domain overlap caused by the plurality of channels in different transmission directions.

The same transmission direction includes: the same transmission direction between DL transmissions and the same transmission direction between UL transmissions.

The rule 1 includes: first processing a time domain overlap between DL transmissions and a time domain overlap between UL transmissions respectively, and obtaining a result DL transmission and a result UL transmission respectively; then addressing a time domain overlap between the result DL transmission and the result UL transmission to obtain the final DL transmission or UL transmission that needs to be performed.

Relevant operations are shown as follows.

### First step:

In this SBFD slot, a time domain overlap between DL transmissions and a time domain overlap between UL transmissions are addressed respectively. Addressing the time domain overlap between DL transmissions and the time domain overlap between UL transmissions may include: first addressing the time domain overlap between DL transmissions, and then addressing the time domain overlap between UL transmissions; or vice versa; or may be performed in parallel.

Addressing the time domain overlap between DL transmissions to obtain the result DL transmission includes at least one of the following:
Alt1, for all DL transmissions, a time domain overlap for DL transmissions including DL transmissions with repetition is addressed first; then a time domain overlap for DL transmissions including DL transmissions without repetition is addressed; then a time domain overlap caused by DL transmissions obtained from the above two steps is addressed.

Sub-item 1, addressing a time domain overlap for DL transmissions including DL transmissions with repetition first is that DL transmissions corresponding to the addressed time domain overlap at least include a DL transmission with repetition. For example, based on at least one of the following parameters: a starting slot of DL transmission, a starting symbol of DL transmission, and a number of symbols of DL transmission (refer to the following description for the use of these three parameters), a DL transmission with repetition (referred to as a first DL transmission) is determined (from all DL transmissions with repetition); then a DL transmission that overlaps with the first DL transmission in the time domain (referred to as a second DL transmission) is determined, so that this time domain overlap for transmissions including DL transmissions with repetition occurs between the first DL transmission and the second DL transmission. The second DL transmission may be a DL transmission with/without repetition. For the remaining DL transmissions (i.e., transmissions after deleting the first DL transmission and the second DL transmission (if the second transmission has repetition) from all DL transmissions with repetition), the above processes are repeated until all DL transmissions (with repetition) are processed, or a determined number of first DL transmissions meets the receiving capability of the UE. In this way, based on the above processing, one or more first DL transmissions obtained may be taken as the DL transmissions output of this processing.

Sub-item 2, addressing a time domain overlap for DL transmissions including DL transmissions without repetition is that DL transmissions corresponding to the addressed time domain overlap are all DL transmissions without repetition. For example, based on at least one of the following parameters: a starting symbol of DL transmission, and a number of symbols of DL transmission, a DL transmission without repetition (referred to as a third DL transmission) is determined (from all DL transmissions without repetition); then a DL transmission that overlaps with the third DL transmission in the time domain (referred to as a fourth DL transmission) is determined, so that this time domain overlap for transmissions including DL transmissions without repetition occurs between the third DL transmission and the fourth DL transmission. The fourth DL transmission is a DL transmission without repetition. For the remaining DL transmissions (i.e., transmissions after deleting the third DL transmission and the fourth DL transmission from all DL transmissions without repetition), the above processes are repeated until all DL transmissions (without repetition) are processed, or a determined number of third DL transmissions meets the receiving capability of the UE. In this way, based on the above processing, one or more third DL transmissions obtained may be taken as the DL transmissions output of this processing.

Sub-item 3, addressing a time domain overlap caused by the first DL transmissions and the third DL transmissions obtained from the above two steps (sub-item 1 and sub-item 2). A relevant method includes: performing the first DL transmission and the third DL transmission according to the above-mentioned method of sub-item 1 or sub-item 2 to obtain a temporary result DL transmission. For example, based on at least one of the following: a starting slot of DL transmission, a starting symbol of DL transmission, and a number of symbols of DL transmission, a DL transmission (referred to as a fifth DL transmission) is determined (from all of the first transmissions and third DL transmissions); then a DL transmission that overlaps with the fifth DL transmission in the time domain (referred to as a sixth DL transmission) is determined. For the remaining DL transmissions (i.e., transmissions after deleting the fifth DL transmission and the sixth DL transmission from all of the first transmissions and third DL transmissions), the above processes are repeated until all of the first transmissions and third DL transmissions are processed, or a determined number of fifth DL transmissions meets the receiving capability of the UE. Herein, based on the above processing, one or more fifth DL transmissions may be obtained as temporary result DL transmissions (referred to as result DL transmissions based on Alt1).

Alt2, for all DL transmissions (including transmissions with/without repetition), based on at least one of the following: a starting slot of the DL transmission, a starting symbol of the DL transmission, and a number of symbols of the DL transmission, one DL transmission (referred to as a seventh DL transmission) is selected from all DL transmissions; then a DL transmission that overlaps with the seventh DL transmission in the time domain (referred to as an eighth DL transmission) is determined. For the remaining DL transmissions (i.e., transmissions after deleting the seventh DL transmission and the eighth DL transmission from all DL transmissions), the above processes are repeated until all DL transmissions are processed, or a determined number of seventh DL transmissions meets the receiving capability of the UE. Herein, based on the above processing, one or more seventh DL transmissions may be obtained as temporary result DL transmissions (referred to as result DL transmissions based on Alt2).

The seventh DL transmission is determined based on at least one of the following: a starting slot of the DL transmission, a starting symbol of the DL transmission, a number of symbols of the DL transmission, and the seventh transmission may or may not have repetition, and the eighth DL transmission may or may not have repetition. Alternatively, the seventh DL transmission is determined based on at least one of the following: a starting symbol of the DL transmission and a number of symbols of the DL transmission, and the seventh transmission may or may not have repetition, and the eighth DL transmission may or may not have repetition.

Alt3, if the SBFD slot includes a time domain overlap between a dynamic grant PDSCH with or without repetition and a configured grant PDSCH, a number of symbols N between an ending symbol of a PDCCH corresponding to a dynamic grant PDSCH scheduled based on DCI and a starting symbol of a configured grant (semi-persistently scheduled) PDSCH, they are used to determine whether the dynamic grant PDSCH or the configured grant (semi-persistently scheduled) PDSCH is temporary result DL transmissions obtained based on Alt3. If N is greater than or equal to 14, the dynamic grant PDSCH is taken as the temporary result DL transmission obtained based on Alt3, otherwise the configured grant (semi-persistently scheduled) PDSCH is taken as the temporary result DL transmission obtained based on Alt3.

A result DL transmission obtained from Alt1, Alt2, or Alt3 mentioned above is taken as a result DL transmission obtained in the first step after addressing the time domain overlap between DL transmissions.

Illustration 1: a plurality of Alt1, Alt2, and Alt3 may be used in combination and may be (alternately) reused.

Illustration 2: based on the result DL transmission obtained from the first step may also be an original DL transmission, for example, if there is only one DL transmission in the SBFD slot, or if the plurality of DL transmissions do not overlap with each other. That is to say, the corresponding processing in the above process may only be performed when the corresponding time domain overlap occurs. If the corresponding time domain overlap does not occur, the corresponding processing should be skipped.

Illustration 3: In Alt1-3, before processing the time domain overlap in the SBFD slot, the base station and UE may agree in advance whether to exclude DL transmissions that overlap with UL symbols or whether to exclude DL transmissions that overlap with UL sub bands, for example, by agreeing to "yes" or "no". If the agreement is "yes", then before addressing the time domain overlap, DL transmissions that overlap with UL symbols or UL sub bands are excluded from the DL transmissions in the SBFD slot, and only the remaining DL transmissions are subjected to the above processing, that is, the excluded DL transmissions are not sent or received. If the agreement is "no", then before addressing the time domain overlap, DL transmissions that overlap with UL symbols or UL sub bands are not excluded from the DL transmissions in the SBFD slot, that is, these DL transmissions participate in the above processing.

Illustration 4: optionally, in the result DL transmission obtained above, the DL transmission that overlaps with the UL symbol or UL sub band is deleted, that is the deleted DL transmission is not sent or received.

Addressing the time domain overlap between UL transmissions to obtain the result UL transmission includes at least one of the following:
one or more time domain overlaps caused by PUCCHs with repetition may be addressed first to obtain a temporary result PUCCH with repetition; then one or more time domain overlaps caused by PUCCHs without repetition may be addressed to obtain a temporary result PUCCH without repetition; one or more time domain overlaps caused by the aforementioned (temporary result) PUCCH with repetition and a PUSCH with or without repetition may be further addressed to obtain a temporary result A (result A includes at least one of the following: a PUCCH with repetition, a PUSCH with or without repetition); then one or more time domain overlaps caused by the (temporary result) PUCCH without repetition and a PUSCH with or without repetition may be addressed to obtain a result B (result B includes at least one of the following: a PUCCH without repetition, a PUSCH without repetition).

The result A and result B are taken as the processing results for addressing the time domain overlap between UL transmissions, i.e., the result UL transmission.

Illustration 5: the corresponding processing in the above process may only be performed when the corresponding time domain overlap occurs. If the corresponding time domain overlap does not occur, the corresponding processing should be skipped. In the above processing, the channel processed in the previous step may no longer participate in the next processing, and a processing result channel processed in the previous step may participate in the next processing.

Illustration 6: In the above process, before processing the time domain overlap in the SBFD slot, the base station and UE may agree in advance whether to exclude UL transmissions that overlap with DL sub bands or whether to exclude UL transmissions that overlap with DL sub bands, for example, by agreeing to "yes" or "no". If the agreement is "yes", then before addressing the time domain overlap, UL transmissions that overlap with DL sub bands are excluded from the UL transmissions in the SBFD slot, and only the remaining UL transmissions are subjected to the above processing, that is, the excluded UL transmissions are not sent or received. If the agreement is "no", then before addressing the time domain overlap, UL transmissions that overlap with DL sub bands are not excluded from the UL transmissions in the SBFD slot, that is, these UL transmissions participate in the above processing.

Illustration 7: from the result UL transmission obtained above, the result UL transmission that overlap with DL symbols in the time domain should be deleted, or the result UL transmission that overlap with DL sub bands in the time or frequency domain should be deleted, i.e., neither transmission nor reception for this result UL transmission should be performed.

### Second step:

A time domain overlap caused by the result DL transmission and the result UL transmission obtained in the first step above is addressed (if any overlap occurs). The corresponding processing includes the following sub rule 1-A (the sub rule 1-A may also be independently used to address a time domain overlap caused by DL transmission and UL transmission in a SBFD slot, as shown in rule 2 and rule 3 below).

For the convenience of description, the following assumption is made: recording the result DL transmission and result UL transmission obtained in the first step as set Q. Then the following processes are performed:
Process 1: a channel (referred to as a first channel) from is determined Q. A method for determining the first channel includes at least one of the following.

Alt4, the first channel (including DL transmission and UL transmission) is determined from set Q based on at least one of the following factors: a starting slot, a starting symbol, and a number of symbols. For example, the first channel is a channel with the earliest starting slot in the set Q. Optionally, based on the above operation, if a plurality of channels are determined, the first channel is a channel with the earliest starting symbol among the plurality of channels determined in the previous step; if (optionally) a plurality of channels are still determined, the first channel is a channel with the highest number of symbols among the plurality of channels determined in the previous step; if only one channel is obtained after performing the above operations, then that channel is the first channel; otherwise, if a plurality of channels are obtained after the above operations are performed, then:
among the plurality of channels obtained, there is only one channel in the same transmission direction (the base station should ensure that there is only one channel in the same transmission direction among the plurality of channels obtained, that is, the UE does not expect the plurality of channels in the same transmission direction). And based on the agreement with the UE, the DL transmission or UL transmission in the obtained plurality of channels is the first channel.

Alternatively, if there are a plurality of channels in the same transmission direction among the plurality of obtained channels, the base station and UE consider that this situation is an error and should stop sending and receiving any channel.

Alternatively, if among the obtained plurality of channels (the obtained plurality of channels may also be the plurality of channels in one SBFD slot, rather than the plurality of channels obtained after the above processing), DL transmissions are PDSCHs scheduled based on DCI (referred to as DG PDSCHs), and UL transmissions are configured grant PUSCHs (referred to as CG PUSCH), then if a gap between an ending symbol of a PDCCH corresponding to DCI of DG PDSCH and a starting symbol of the CG PUSCH is less than 14 symbols, then CG PUSCH is performed first, that is, CG PUSCH has a higher priority, which is taken as the first channel; otherwise, DG PDSCH is performed first, that is, DG PDSCH has a higher priority, which is taken as the first channel. This processing method may be independently used to address the overlap problem between DG PDSCH and CG PUSCH in an SBFD slot.

Alternatively, if among the obtained plurality of channels (the obtained plurality of channels may also be the plurality of channels in one SBFD slot, rather than the plurality of channels obtained after the above processing), DL transmissions are semi-persistently scheduled PDSCHs (referred to as SPS PDSCHs), and UL transmissions are dynamic grant PUSCHs (referred to as DG PUSCH) scheduled based on DCI, then if a gap between an ending symbol of a PDCCH corresponding to DCI of DG PUSCH and a starting symbol of the SPS PDSCH is less than 14 symbols, then SPS PDSCH is performed first, that is, SPS PDSCH has a higher priority, which is taken as the first channel; otherwise, DG PUSCH is performed first, that is, DG PUSCH has a higher priority, which is taken as the first channel. This processing method may be independently used to address the overlap problem between DG PUSCH and SPS PDSCH in an SBFD slot.

Illustration 8: the corresponding processing in the above process may only be performed when the corresponding situation occurs. If the corresponding situation does not occur, the corresponding processing should be skipped.

Alt5, the base station and UE agreeing to determine the priority of the first channel based on configuration or pre-defined priority includes: configuring or pre-defining a priority of DL transmission is higher than a priority of UL transmission, or a priority of UL transmission is higher than a priority of DL transmission.

Assuming that a priority of UL transmission being higher than a priority of DL transmission is configured or pre-defined, then the operations in Alt4 are performed for all UL transmissions to obtain a first channel. For example, channels included in the set Q in Alt4 are set as UL transmissions, and then operations are performed to obtain the first channel.

Assuming that a priority of DL transmission being higher than a priority of UL transmission is configured or pre-defined, then the first channel is determined from DL transmissions. For example, the operations in Alt4 are performed on all DL transmissions to obtain a first channel, including setting the channels included in the set Q in Alt4 as DL transmissions, and then performing operations to obtain the first channel. For example, if the obtained plurality of DL transmissions are SPS PDSCHs, a SPS with the smallest index is configured as the first channel. For example, if the obtained plurality of DL transmissions are DG PDSCHs, a PDSCH with the latest or earliest corresponding DCI is taken as the first channel. For example, if the obtained plurality of DL transmissions include DG PDSCHs and SPS PDSCHs, and if a gap between an ending symbol of a PDCCH corresponding to DCI of a DG PDSCH and a starting symbol of a SPS PDSCH is not less than 14 symbols, then the DG PDSCH is taken as the first channel, otherwise the SPS PDSCH is taken as the first channel.

Illustration 9: the corresponding processing in the above process may only be performed when the corresponding situation occurs. If the corresponding situation does not occur, the corresponding processing should be skipped.

Alt6, if the DL transmissions included in Q are DG PDSCHs and the UL transmissions are CG PUSCHs, then if a gap between an ending symbol of a PDCCH corresponding to DCI of a DG PDSCH and a starting symbol of a CG PUSCH is less than 14 symbols, then the CG PUSCH is performed first, that is, the CG PUSCH has a higher priority and is taken as the first channel; otherwise, the DG PDSCH is performed first, that is, the DG PDSCH has a higher priority and is taken as the first channel. This processing method may be independently used to address the overlap problem between DG PDSCH and CG PUSCH in an SBFD slot.

Alternatively, if the DL transmissions included in Q are SPS PDSCHs and the UL transmissions are DG PUSCHs, then if a gap between an ending symbol of a PDCCH corresponding to DCI of a DG PUSCH and a starting symbol of an SPS PDSCH is less than 14 symbols, then the SPS PDSCH is performed first, that is, the SPS PDSCH has a higher priority and is taken as the first channel; otherwise, the DG PUSCH is performed first, that is, the DG PUSCH has a higher priority and is taken as the first channel. This processing method may be independently used to address the overlap problem between DG PUSCH and SPS PDSCH in an SBFD slot.

The methods in Alt4, Alt5, and Alt6 of the above sub rule 1-A may be used in combination, or a portion of the methods in Alt4, Alt5, and Alt6 may be used in combination.

Process 2: a DL transmission and a UL transmission that overlap with the first channel obtained in process 1 are deleted from Q, and the first channel is also deleted from Q, that is, Q is updated.

Process 3: for the channels in Q (note that the set Q has already been updated in process 2), the process 1 and process 2 are repeated until all channels in Q are processed, or until a frequency of uplink-downlink switches caused by the determined first channel in the SBFD slot reaches a preset frequency (i.e., a maximum number of uplink-downlink switches allowed by the base station and UE in one SBFD slot), or until a number of first channels determined in the SBFD slot reaches a preset number, i.e., an upper limit of UE capability requirements.

The upper limit of UE capability requirement refers to a maximum value of a sum of a number of UL transmissions sent and a number of DL transmissions received by the UE in an SBFD slot.

After performing processes 1, 2, and 3 mentioned above, that is, after performing the second step, one or more first channels are obtained from the SBFD slot as the final (i.e., surviving) channels for transmission. The first channel includes DL transmission and/or UL transmission.

Illustration 10: if the first channel includes at least one DL transmission and UL transmission, the UE expects an effective time gap between the DL transmission and the UL transmission to support a required conversion time between the DL transmission and UL transmission.

Illustration 11: if the first channel is DL transmission, then the DL transmission should not overlap with UL symbols in the time domain, or the DL transmission should not overlap with UL sub bands in the time or frequency domain. If overlap occurs, the DL transmission may be deleted, that is, the DL transmission may not be used for transmission or reception.

Illustration 12: if the first channel is UL transmission, then the UL transmission should not overlap with DL symbols in the time domain, or the UL transmission should not overlap with DL sub bands in the time or frequency domain. If overlap occurs, the UL transmission may be deleted, that is, the UL transmission may not be used for transmission or reception.

### Rule 2

The rule 2 is similar to sub rule 1-A mentioned above. The difference is that the DL transmission and UL transmission used to form set Q have different origins, and the determination for the first channel is slightly different (without considering the factor of the starting slot). The rule 2 is capable of addressing a time domain overlap problem between DL transmission and UL transmission in the SBFD slot. Although it has some drawbacks, it is relatively simple and is capable of addressing most time domain overlap problems.

The processing related to the rule 2 includes:
For the convenience of description, it is assumed that DL transmissions and UL transmissions in an SBFD slot are set Q. In this way, set Q includes all DL transmissions and UL transmissions in the SBFD slot, and there is no need to separately handle overlapping DL and UL transmissions in the SBFD slot.

Illustration 6: before forming the Q, the base station and UE may agree in advance whether to exclude UL transmissions that overlap with DL symbols or whether to exclude UL transmissions that overlap with DL sub bands, for example, by agreeing to "yes" or "no". If the agreement is "yes", then before forming the Q, some corresponding UL transmissions are excluded from the SBFD slot, and Q is only formed for the remaining UL transmissions, that is, the excluded UL transmissions may not be sent or received. If the agreement is "no", then before forming Q, some corresponding UL transmissions are not excluded from the SBFD slot, and all UL transmissions are used to form Q.

Illustration 6: before forming the Q, the base station and UE may agree in advance whether to exclude DL transmissions that overlap with UL symbols or whether to exclude DL transmissions that overlap with UL sub bands, for example, by agreeing to "yes" or "no". If the agreement is "yes", then before forming the Q, some corresponding DL transmissions are excluded from the SBFD slot, and Q is only formed for the remaining DL transmissions, that is, the excluded DL transmissions may not be sent or received. If the agreement is "no", then before forming Q, some corresponding DL transmissions are not excluded from the SBFD slot, and all DL transmissions are used to form Q.

Process 1-1: a channel (referred to as a first channel) from is determined Q. A method for determining the first channel includes at least one of the following.

Alt4-1, the first channel (including DL transmission and UL transmission) is determined from set Q based on at least one of the following factors: a starting symbol, and a number of symbols. For example, the first channel is a channel with the earliest starting symbol in the SBFD slot; if (optionally) a plurality of channels are still determined, the first channel is a channel with the highest number of symbols among the plurality of channels determined in the previous step; if only one channel is obtained after performing the above operations, then that channel is the first channel; otherwise, if a plurality of channels are obtained after the above operations are performed, then:
among the plurality of channels obtained, there is only one channel in the same transmission direction (the base station should ensure that there is only one channel in the same transmission direction among the plurality of channels obtained, that is, the UE does not expect the plurality of channels in the same transmission direction). And based on the agreement with the UE, the DL transmission or UL transmission in the obtained plurality of channels is the first channel.

Alternatively, if there are a plurality of channels in the same transmission direction among the plurality of obtained channels, the base station and UE consider that this situation is an error and should stop sending and receiving any channel.

Alternatively, if among the obtained plurality of channels, DL transmissions are PDSCHs scheduled based on DCI (referred to as DG PDSCHs), and UL transmissions are configured grant PUSCHs (referred to as CG PUSCH), then if a gap between an ending symbol of a PDCCH corresponding to DCI of DG PDSCH and a starting symbol of the CG PUSCH is less than 14 symbols, then CG PUSCH is performed first, that is, CG PUSCH has a higher priority, which is taken as the first channel; otherwise, DG PDSCH is performed first, that is, DG PDSCH has a higher priority, which is taken as the first channel. This processing method may be independently used to address the overlap problem between DG PDSCH and CG PUSCH in an SBFD slot.

Alternatively, if among the obtained plurality of channels, DL transmissions are semi-persistently scheduled PDSCHs (referred to as SPS PDSCHs), and UL transmissions are dynamic grant PUSCHs (referred to as DG PUSCHs) scheduled based on DCI, then if a gap between an ending symbol of a PDCCH corresponding to DCI of DG PUSCH and a starting symbol of the SPS PDSCH is less than 14 symbols, then SPS PDSCH is performed first, that is, SPS PDSCH has a higher priority, which is taken as the first channel; otherwise, DG PUSCH is performed first, that is, DG PUSCH has a higher priority, which is taken as the first channel. This processing method may be independently used to address the overlap problem between DG PUSCH and SPS PDSCH in an SBFD slot.

Illustration 15: the corresponding processing in the above process may only be performed when the corresponding situation occurs. If the corresponding situation does not occur, the corresponding processing should be skipped.

Alt5-1 (the same as Alt5), the base station and UE agreeing to determine the priority of the first channel based on configuration or pre-defined priority includes: configuring or pre-defining a priority of DL transmission is higher than a priority of UL transmission, or a priority of UL transmission is higher than a priority of DL transmission.

Assuming that a priority of UL transmission being higher than a priority of DL transmission is configured or pre-defined, then the operations in Alt4-1 are performed for all UL transmissions to obtain a first channel. For example, channels included in the set Q in Alt4-1 are set as UL transmissions, and then operations are performed to obtain the first channel.

If the configuration or predefined DL transmission priority is higher than UL transmission, then determine that the first channel is from that DL transmission. For example, performing the operation in Alt4-1 for all DL transmissions results in a first channel. Including setting the channels included in the set Q in Alt4-1 as DL transmission, and then executing to obtain the first channel. For example, if the obtained plurality of DL transmissions are SPS PDSCHs, a SPS with the smallest index is configured as the first channel. For example, if the obtained plurality of DL transmissions are DG PDSCHs, a PDSCH with the latest or earliest corresponding DCI is taken as the first channel. For example, if the obtained plurality of DL transmissions include DG PDSCHs and SPS PDSCHs, and if a gap between an ending symbol of a PDCCH corresponding to DCI of a DG PDSCH and a starting symbol of a SPS PDSCH is not less than 14 symbols, then the DG PDSCH is taken as the first channel, otherwise the SPS PDSCH is taken as the first channel.

Illustration 16: the corresponding processing in the above process may only be performed when the corresponding situation occurs. If the corresponding situation does not occur, the corresponding processing should be skipped.

Alt6-1 (the same as Alt6), if the DL transmissions included in Q are DG PDSCHs and the UL transmissions are CG PUSCHs, then if a gap between an ending symbol of a PDCCH corresponding to DCI of a DG PDSCH and a starting symbol of a CG PUSCH is less than 14 symbols, then the CG PUSCH is performed first, that is, the CG PUSCH has a higher priority and is taken as the first channel; otherwise, the DG PDSCH is performed first, that is, the DG PDSCH has a higher priority and is taken as the first channel. This processing method may be independently used to address the overlap problem between DG PDSCH and CG PUSCH in an SBFD slot.

Alternatively, if the DL transmissions included in Q are SPS PDSCHs and the UL transmissions are DG PUSCHs, then if a gap between an ending symbol of a PDCCH corresponding to DCI of a DG PUSCH and a starting symbol of an SPS PDSCH is less than 14 symbols, then the SPS PDSCH is performed first, that is, the SPS PDSCH has a higher priority and is taken as the first channel; otherwise, the DG PUSCH is performed first, that is, the DG PUSCH has a higher priority and is taken as the first channel. This processing method may be independently used to address the overlap problem between DG PUSCH and SPS PDSCH in an SBFD slot.

The methods in Alt4-1, Alt5-1, and Alt6-1 above may be used in combination, or a portion of the methods in Alt4-1, Alt5-1, and Alt6-1 may be used in combination.

Process 2-1: the DL and UL transmissions that overlap with the first channel obtained in process 1-1 are deleted from Q, and the first channel is also deleted from Q, that is, Q is updated.

Process 3-1: for the channels in Q (note that the set Q has already been updated in process 2-1), the process 1-1 and process 2-1 are repeated until all channels in Q are processed, or until a frequency of uplink-downlink switches caused by the determined first channel in the SBFD slot reaches a preset frequency (i.e., a maximum number of uplink-downlink switches allowed by the base station and UE in one SBFD slot), or until a number of first channels determined in the SBFD slot reaches a preset number, i.e., an upper limit of UE capability requirements.

The upper limit of UE capability requirement refers to a maximum value of a sum of a number of UL transmissions sent and a number of DL transmissions received by the UE in an SBFD slot.

After performing processes 1-1, 2-1, and 3-1 mentioned above, that is, after performing the second step, one or more first channels are obtained from the SBFD slot as the final (i.e., surviving) channels for transmission. The first channel includes DL transmission and/or UL transmission.

Illustration 17: if the first channel includes at least one DL transmission and UL transmission, the UE expects an effective gap between DL transmission and UL transmission to support a switch between DL transmission and UL transmission.

Illustration 18: if the first channel is DL transmission, then the DL transmission should not overlap with UL symbols in the time domain, or the DL transmission should not overlap with UL sub bands in the time or frequency domain. If overlap occurs, the DL transmission may be deleted, that is, the DL transmission may not be used for transmission or reception.

Illustration 19: if the first channel is UL transmission, then the UL transmission should not overlap with DL symbols in the time domain, or the UL transmission should not overlap with DL sub bands in the time or frequency domain. If overlap occurs, the UL transmission may be deleted, that is, the UL transmission may not be used for transmission or reception.

### Rule 3

The rule 3 is similar to sub rule 1-A mentioned above. The difference is that the DL transmissions and UL transmissions used to form set Q have different origins. The rule 3 is capable of addressing a time domain overlap problem between DL transmission and UL transmission in the SBFD slot. Although it has some drawbacks, it is relatively simple and is capable of addressing most time domain overlap problems. The processing method for rule 3 may refer to Embodiment 2.

The processing related to the rule 3 includes:
For the convenience of description, it is assumed that DL transmissions and UL transmissions in an SBFD slot are set Q. In this way, set Q includes all DL transmissions and UL transmissions in the SBFD slot, and there is no need to separately handle overlapping DL and UL transmissions in the SBFD slot.

Illustration 20: before forming the Q, the base station and UE may agree in advance whether to exclude UL transmissions that overlap with DL symbols or whether to exclude UL transmissions that overlap with DL sub bands, for example, by agreeing to "yes" or "no". If the agreement is "yes", then before forming the Q, some corresponding UL transmissions are excluded from the SBFD slot, and Q is only formed for the remaining UL transmissions, that is, the excluded UL transmissions may not be sent or received. If the agreement is "no", then before forming Q, some corresponding UL transmissions are not excluded from the SBFD slot, and all UL transmissions are used to form Q.

Illustration 21: before forming the Q, the base station and UE may agree in advance whether to exclude DL transmissions that overlap with UL symbols or whether to exclude DL transmissions that overlap with UL sub bands, for example, by agreeing to "yes" or "no". If the agreement is "yes", then before forming the Q, some corresponding DL transmissions are excluded from the SBFD slot, and Q is only formed for the remaining DL transmissions, that is, the excluded DL transmissions may not be sent or received. If the agreement is "no", then before forming Q, some corresponding DL transmissions are not excluded from the SBFD slot, and all DL transmissions are used to form Q.

Process 1-2: a channel (referred to as a first channel) from is determined Q. A method for determining the first channel includes at least one of the following.

Alt4-2 (the same as Alt4), the first channel (including DL transmission and UL transmission) is determined from set Q based on at least one of the following factors: a starting slot, a starting symbol, and a number of symbols. For example, the first channel is a channel with the earliest starting slot in the set Q. Optionally, based on the above operation, if a plurality of channels are determined, the first channel is a channel with the earliest starting symbol among the plurality of channels determined in the previous step; if (optionally) a plurality of channels are still determined, the first channel is a channel with the highest number of symbols among the plurality of channels determined in the previous step; if only one channel is obtained after performing the above operations, then that channel is the first channel; otherwise, if a plurality of channels are obtained after the above operations are performed, then:
among the plurality of channels obtained, there is only one channel in the same transmission direction (the base station should ensure that there is only one channel in the same transmission direction among the plurality of channels obtained, that is, the UE does not expect the plurality of channels in the same transmission direction). And based on the agreement with the UE, the DL transmission or UL transmission in the obtained plurality of channels is the first channel.

Alternatively, if there are a plurality of channels in the same transmission direction among the plurality of obtained channels, the base station and UE consider that this situation is an error and should stop sending and receiving any channel.

Alternatively, if among the obtained plurality of channels, DL transmissions are PDSCHs scheduled based on DCI (referred to as DG PDSCHs), and UL transmissions are configured grant PUSCHs (referred to as CG PUSCH), then if a gap between an ending symbol of a PDCCH corresponding to DCI of DG PDSCH and a starting symbol of the CG PUSCH is less than 14 symbols, then CG PUSCH is performed first, that is, CG PUSCH has a higher priority, which is taken as the first channel; otherwise, DG PDSCH is performed first, that is, DG PDSCH has a higher priority, which is taken as the first channel. This processing method may be independently used to address the overlap problem between DG PDSCH and CG PUSCH in an SBFD slot.

Alternatively, if among the obtained plurality of channels, DL transmissions are semi-persistently scheduled PDSCHs (referred to as SPS PDSCHs), and UL transmissions are dynamic grant PUSCHs (referred to as DG PUSCHs) scheduled based on DCI, then if a gap between an ending symbol of a PDCCH corresponding to DCI of DG PUSCH and a starting symbol of the SPS PDSCH is less than 14 symbols, then SPS PDSCH is performed first, that is, SPS PDSCH has a higher priority, which is taken as the first channel; otherwise, DG PUSCH is performed first, that is, DG PUSCH has a higher priority, which is taken as the first channel. This processing method may be independently used to address the overlap problem between DG PUSCH and SPS PDSCH in an SBFD slot.

Illustration 22: the corresponding processing in the above process may only be performed when the corresponding situation occurs. If the corresponding situation does not occur, the corresponding processing should be skipped.

Alt5-2 (the same as Alt5), the base station and UE agreeing to determine the priority of the first channel based on configuration or pre-defined priority includes: configuring or pre-defining a priority of DL transmission is higher than a priority of UL transmission, or a priority of UL transmission is higher than a priority of DL transmission.

Assuming that a priority of UL transmission being higher than a priority of DL transmission is configured or pre-defined, then the operations in Alt4-2 are performed for all UL transmissions to obtain a first channel. For example, channels included in the set Q in Alt4-2 are set as UL transmissions, and then operations are performed to obtain the first channel.

Assuming that a priority of DL transmission being higher than a priority of UL transmission is configured or pre-defined, then the first channel is determined from DL transmissions. For example, the operations in Alt4-2 are performed on all DL transmissions to obtain a first channel, including setting the channels included in the set Q in Alt4-2 as DL transmissions, and then performing operations to obtain the first channel. For example, if the obtained plurality of DL transmissions are SPS PDSCHs, a SPS with the smallest index is configured as the first channel. For example, if the obtained plurality of DL transmissions are DG PDSCHs, a PDSCH with the latest or earliest corresponding DCI is taken as the first channel. For example, if the obtained plurality of DL transmissions include DG PDSCHs and SPS PDSCHs, and if a distance between an ending symbol of a PDCCH corresponding to DCI of a DG PDSCH and a starting symbol of a SPS PDSCH is not less than 14 symbols, then the DG PDSCH is taken as the first channel, otherwise the SPS PDSCH is taken as the first channel.

Illustration 23: the corresponding processing in the above process may only be performed when the corresponding situation occurs. If the corresponding situation does not occur, the corresponding processing should be skipped.

Alt6-2 (the same as Alt6), if the DL transmissions included in Q are DG PDSCHs and the UL transmissions are CG PUSCHs, then if a gap between an ending symbol of a PDCCH corresponding to DCI of a DG PDSCH and a starting symbol of a CG PUSCH is less than 14 symbols, then the CG PUSCH is performed first, that is, the CG PUSCH has a higher priority and is taken as the first channel; otherwise, the DG PDSCH is performed first, that is, the DG PDSCH has a higher priority and is taken as the first channel. This processing method may be independently used to address the overlap problem between DG PDSCH and CG PUSCH in an SBFD slot.

Alternatively, if the DL transmissions included in Q are SPS PDSCHs and the UL transmissions are DG PUSCHs, then if a gap between an ending symbol of a PDCCH corresponding to DCI of a DG PUSCH and a starting symbol of an SPS PDSCH is less than 14 symbols, then the SPS PDSCH is performed first, that is, the SPS PDSCH has a higher priority and is taken as the first channel; otherwise, the DG PUSCH is performed first, that is, the DG PUSCH has a higher priority and is taken as the first channel. This processing method may be independently used to address the overlap problem between DG PUSCH and SPS PDSCH in an SBFD slot.

The methods in Alt4-2, Alt5-2, and Alt6-2 above may be used in combination, or a portion of the methods in Alt4-2, Alt5-2, and Alt6-2 may be used in combination.

Process 2-2: the DL and UL transmissions that overlap with the first channel obtained in process 1-2 are deleted from Q, and the first channel is also deleted from Q, that is, Q is updated.

Process 3-2: for the channels in Q (note that the set Q has already been updated in process 2-2), the process 1-2 and process 2-2 are repeated until all channels in Q are processed, or until a frequency of uplink-downlink switches caused by the determined first channel in the SBFD slot reaches a preset frequency (i.e., a maximum number of uplink-downlink switches allowed by the base station and UE in one SBFD slot), or until a number of first channels determined in the SBFD slot reaches a preset number, i.e., an upper limit of UE capability requirements.

The upper limit of UE capability requirement refers to a maximum value of a sum of a number of UL transmissions sent and a number of DL transmissions received by the UE in an SBFD slot.

After performing processes 1-2, 2-2, and 3-2 mentioned above, that is, after performing the second step, one or more first channels are obtained from the SBFD slot as the final (i.e., surviving) channels for transmission. The first channel includes DL transmission and/or UL transmission.

Illustration 24: if the first channel includes at least one DL transmission and UL transmission, the UE expects an effective time gap between the DL transmission and the UL transmission to support a required conversion time between the DL transmission and UL transmission.

Illustration 25: if the first channel is DL transmission, then the DL transmission should not overlap with UL symbols in the time domain, or the DL transmission should not overlap with UL sub bands in the time or frequency domain. If overlap occurs, the DL transmission may be deleted, that is, the DL transmission may not be used for transmission or reception.

Illustration 26: if the first channel is UL transmission, then the UL transmission should not overlap with DL symbols in the time domain, or the UL transmission should not overlap with DL sub bands in the time or frequency domain. If overlap occurs, the UL transmission may be deleted, that is, the UL transmission may not be used for transmission or reception. Processing with above methods addresses a time domain overlap caused by DL transmission and UL transmission in the SBFD slot, and they have the same physical layer priority. If the DL transmission and UL transmission in the SBFD slot have different physical layer priorities, the time domain overlap may be addressed according to the following rules: first addressing a time domain overlap caused by the DL transmissions and UL transmissions with the same physical layer priority separately according to the above methods to obtain output channels, and then addressing a time domain overlap caused by the output channels according to the physical layer priority. An output channel with a lower priority is cancelled, and an output channel with a higher priority is performed.

The solutions provided in the embodiments of the present disclosure are introduced above from the perspective of methods. A signal transmission apparatus is further shown below, which is configured to perform the signal transmission method in any of the above-mentioned embodiments and implementations thereof. It could be understood that, in order to implement the signal transmission method, the signal transmission apparatus includes corresponding hardware structures and/or software modules for implementing various functions. Those skilled in the art should easily realize that the present disclosure may be implemented in the form of hardware or a combination of hardware and computer software in combination with algorithms and steps described in the embodiments of the present disclosure. Whether a certain function is implemented by hardware or by computer software travelling hardware depends on the specific application and design constraint conditions of the technical solutions. A professional technician may use different methods to implement the described functions for each specific application, but such implementation should not be considered beyond the scope of the present disclosure.

The signal transmission apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

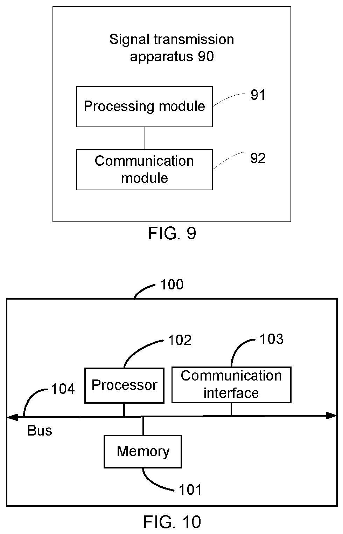

FIG. 9 shows a signal transmission apparatus provided in the embodiments of the present disclosure. The signal transmission apparatus may at least be applied to a base station or a terminal. The signal transmission apparatus 90 includes a processing module 91 and a communication module 92.

The processing module 91 is configured to a first channel set, where the first channel set includes a plurality of channels to be transmitted, at least two channels to be transmitted of the plurality of channels to be transmitted overlap in time domain.

The processing module 91 is further configured to determine a second channel set based on the first channel set, where channels to be transmitted of the second channel set do not overlap in time domain.

The communication module 92 is configured to transmit or receive the channels to be transmitted of the second channel set.

In some embodiments, a channel to be transmitted includes at least one of:
a dynamic grant physical downlink shared channel with repetition scheduled based on downlink control information (DCI),
a dynamic grant PDSCH without repetition scheduled based on DCI,
a configured grant PDSCH with repetition,
a configured grant PDSCH without repetition,
a physical downlink control channel (PDCCH),
a dynamic grant physical uplink shared channel (PUSCH) with repetition scheduled based on DCI,
a dynamic grant PUSCH without repetition scheduled based on DCI,
a configured grant PUSCH with repetition,
a configured grant PUSCH without repetition,
a physical uplink control channel (PUCCH) with repetition scheduled based on DCI,
a PUCCH without repetition scheduled based on DCI,
a configured grant PUCCH with repetition,
a configured grant PUCCH without repetition,
a physical random access channel (PRACH) with repetition scheduled based on DCI,
a PRACH without repetition scheduled based on DCI,
a PRACH with repetition that is not scheduled based on DCI,
a PRACH without repetition that is not scheduled based on DCI,
a sounding reference signal (SRS),
a plurality of PUSCHs scheduled based on one DCI,
a PUSCH scheduled based on one DCI and transmitted across a plurality of slots,
a plurality of PDSCH transmissions scheduled based on one DCI,
a downlink reference signal used for decoding, or
a channel state information reference signal (CSI-RS).

In some embodiments, the processing module 91 is further configured to repeatedly perform a first processing operation on the first channel set until a first preset condition is met, to obtain the second channel set;where the first processing operation includes: adding a channel to be transmitted with a highest priority from the first channel set to the second channel set; and deleting the channel to be transmitted with the highest priority and other channels to be transmitted of the first channel set that overlap with the channel to be transmitted with the highest priority in time domain from the first channel set, to obtain an updated first channel set.

In some embodiments, the first preset condition includes at least one of:
the updated first channel set being an empty set;
a number of channels to be transmitted in the second channel set reaching a preset number; or
a frequency of uplink-downlink switches in a slot determined based on the second channel set reaching a preset frequency.

In some embodiments, the plurality of channels to be transmitted include at least one uplink channel and at least one downlink channel, the first channel set includes a first uplink channel set and a first downlink channel set, the first uplink channel set includes the at least one uplink channel, and the first downlink channel set includes the at least one downlink channel.

Determining the second channel set based on the first channel set includes:
determining a second uplink channel set based on the first uplink channel set, where uplink channels of the second uplink channel set do not overlap in time domain;
determining a second downlink channel set based on the first downlink channel set, where downlink channels of the second downlink channel set do not overlap in time domain; and
determining the second channel set based on the second uplink channel set and the second downlink channel set.

In some embodiments, the processing module 91 is further configured to repeatedly perform a second processing operation on the first uplink channel set until a second preset condition is met, to obtain the second uplink channel set;
where the second processing operation includes: adding a uplink channel with a highest priority from the first uplink channel set to the second uplink channel set; and deleting the uplink channel with the highest priority and other uplink channels that overlap with the uplink channel with the highest priority in time domain from the first uplink channel set, to obtain an updated first uplink channel set;
where the second preset condition includes: the updated first uplink channel set being an empty set.

In some embodiments, processing module 91 is further configured for a base station and a UE to make an agreement to address a time domain overlap caused by a downlink channel with repetition of the first downlink channel set, to obtain a first sub downlink channel set (so that downlink channels with repetition in the first sub downlink channel set do not overlap in time domain);address a time domain overlap caused by a downlink channel without repetition of the first downlink channel set, to obtain a second sub downlink channel set (so that downlink channels without repetition in the second sub downlink channel set do not overlap in the time domain); and address a time domain overlap caused by a downlink channel of the first sub downlink channel set and the second sub downlink channel set, to obtain the second downlink channel set.

In some embodiments, the processing module 91 is further configured to repeatedly perform a third processing operation on the first downlink channel set until a third preset condition is met, to obtain the second downlink channel set;
where the third processing operation includes: adding a downlink channel with a highest priority from the first downlink channel set to the second downlink channel set; and deleting the downlink channel with the highest priority and other downlink channels that overlap with the downlink channel with the highest priority in time domain from the first downlink channel set, to obtain an updated first downlink channel set;
where the third preset condition includes: the updated first downlink channel set being an empty set.

In some embodiments, processing module 91 is further configured to form a third channel set consisting of the second uplink channel set and the second downlink channel set, where the third channel set includes at least one channel to be transmitted; and
repeatedly perform a fourth processing operation on the third channel set until a fourth preset condition is met, to obtain the second channel set; where the fourth processing operation includes: adding a channel to be transmitted with a highest priority from the third channel set to the second channel set; and deleting the channel to be transmitted with the highest priority and other channels to be transmitted that overlap with the channel to be transmitted with the highest priority in time domain from the third channel set, to obtain an updated third channel set.

In some embodiments, the fourth preset condition includes at least one of:
the updated third channel set being an empty set;
a number of channels to be transmitted in the second channel set reaching a preset number; or
a frequency of uplink-downlink switches in a slot determined based on the second channel set reaching a preset frequency.

In some embodiments, a priority of a channel to be transmitted is determined based on at least one of:
whether the channel to be transmitted being with repetition;
a transmission direction of the channel to be transmitted;
a channel type of the channel to be transmitted;
a starting symbol of the channel to be transmitted in a slot;
a number of symbols occupied by the channel to be transmitted in a slot; or
a starting slot of the channel to be transmitted.

In some embodiments, in response to that a gap between an ending symbol of a PDCCH corresponding to a dynamic grant PDSCH and a starting symbol of a configured grant PUSCH is greater than or equal to a preset gap, a priority of the dynamic grant PDSCH is higher than a priority of the configured grant PUSCH; otherwise, the priority of the dynamic grant PDSCH is lower than the priority of the configured grant PUSCH.

In some embodiments, in response to that a gap between an ending symbol of a PDCCH corresponding to a dynamic grant PDSCH and a starting symbol of a semi-persistently scheduled PDSCH is greater than or equal to a preset gap, a priority of the dynamic grant PDSCH is higher than a priority of the semi-persistently scheduled PDSCH; otherwise, the priority of the dynamic grant PDSCH is lower than the priority of the semi-persistently scheduled PDSCH.

In some embodiments, in response to that a gap between an ending symbol of a PDCCH corresponding to a dynamic grant PUSCH and a starting symbol of a semi-persistently scheduled PDSCH is greater than or equal to a preset gap, a priority of the dynamic grant PUSCH is higher than a priority of the semi-persistently scheduled PDSCH; otherwise, the priority of the dynamic grant PUSCH is lower than the priority of the semi-persistently scheduled PDSCH.

In some embodiments, among a plurality of semi-persistently scheduled PDSCHs, a semi-persistently scheduled PDSCH with a smallest index has a highest priority.

In some embodiments, the communication module 92 is further configured, in response to that there are a plurality of channels to be transmitted with a same priority and overlapping in time domain in the first channel set, to stop transmitting the plurality of channels to be transmitted with the same priority and overlapping in time domain.

In a case where the functions of the above-mentioned integrated modules are implemented in the form of hardware, a structure of a communication apparatus is further provided in the embodiments of the present disclosure, and the communication apparatus is configured to perform the signal transmission method provided in the embodiments of the present disclosure. As shown in FIG. 10, the communication apparatus 100 includes a memory 101, a communication interface 103, a processor 102, and a bus 104. Optionally, the communication apparatus may also include.

The memory 101 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 102 may implement or perform various exemplary logical blocks, modules and circuits described in combination with the embodiments of the present disclosure. The processor 102 may be a central processor, a general-purpose processor, a digital signal processor, an application specific integrated circuit, a field programmable gate array, or other programmable logic component, a transistor logic component, a hardware assembly, or any combination thereof. The processor 102 may implement or execute various illustrative logical blocks, modules and circuits described in conjunction with the embodiments of the present disclosure. The processor 102 may also be a combination that implements computing functions, for example, the processor 102 includes a combination of one or more microprocessors, a combination of a DSP (digital signal processor) and a microprocessor, or the like.

The communication interface 103 is configured to connect with other devices through a communication network. The communication network may be the Ethernet, a radio access network, a wireless local area networks (WLAN), or the like.

In some embodiments, the memory 101 may exist independently from the processor 102, and the memory 101 may be connected to the processor 102 through the bus 104 for storing instructions or program codes. In a case where the processor 102 invokes and executes instructions or program codes stored in the memory 101, the signal transmission method provided in the embodiments of the present disclosure may be implemented.

In embodiments, the memory 101 may be integrated with the processor 102.

The bus 104 may be an extended industry standard architecture (EISA) bus, or the like. The bus 104 may be classified as an address bus, a data bus, a control bus, or the like. For ease of representation, only one thick solid line is used in FIG. 10 for representing the bus 104, but it does not indicate that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the signal transmission method as described in any one of the above embodiments.

In an exemplary implementation, the computer may be the signal transmission apparatus described above, and a specific form of the computer is not limited in the present disclosure.

In some examples, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory assembly (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the signal transmission method as described in any one of the above-mentioned embodiments.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure shall be subject to the protection scope of the claims.

## Claims

1. A signal transmission method, comprising:
determining, by a device, a first channel set, wherein the first channel set comprises a plurality of channels to be transmitted, at least two channels to be transmitted of the plurality of channels to be transmitted overlap in time domain;
determining, by the device, a second channel set based on the first channel set, wherein channels to be transmitted of the second channel set do not overlap in time domain; and
transmitting or receiving, by the device, the channels to be transmitted of the second channel set.

2. The method according to claim 1, wherein a channel to be transmitted comprises at least one of:
a dynamic grant physical downlink shared channel with repetition scheduled based on downlink control information (DCI),
a dynamic grant PDSCH without repetition scheduled based on DCI,
a configured grant PDSCH with repetition,
a configured grant PDSCH without repetition,
a physical downlink control channel (PDCCH),
a dynamic grant physical uplink shared channel (PUSCH) with repetition scheduled based on DCI,
a dynamic grant PUSCH without repetition scheduled based on DCI,
a configured grant PUSCH with repetition,
a configured grant PUSCH without repetition,
a physical uplink control channel (PUCCH) with repetition scheduled based on DCI,
a PUCCH without repetition scheduled based on DCI,
a configured grant PUCCH with repetition,
a configured grant PUCCH without repetition,
a physical random access channel (PRACH) with repetition scheduled based on DCI,
a PRACH without repetition scheduled based on DCI,
a PRACH with repetition that is not scheduled based on DCI,
a PRACH without repetition that is not scheduled based on DCI,
a sounding reference signal (SRS),
a plurality of PUSCHs scheduled based on one DCI,
a PUSCH scheduled based on one DCI and transmitted across a plurality of slots,
a plurality of PDSCH transmissions scheduled based on one DCI,
a downlink reference signal used for decoding, or
a channel state information reference signal (CSI-RS).

3. The method according to claim 2, wherein determining the second channel set based on the first channel set comprises:
repeatedly performing a first processing operation on the first channel set until a first preset condition is met, to obtain the second channel set; wherein the first processing operation comprises: adding a channel to be transmitted with a highest priority from the first channel set to the second channel set; and deleting the channel to be transmitted with the highest priority and other channels to be transmitted of the first channel set that overlap with the channel to be transmitted with the highest priority in time domain from the first channel set, to obtain an updated first channel set.

4. The method according to claim 3, wherein the first preset condition comprises at least one of:
the updated first channel set being an empty set;
a number of channels to be transmitted in the second channel set reaching a preset number; or
a frequency of uplink-downlink switches in a slot determined based on the second channel set reaching a preset frequency.

5. The method according to claim 1, wherein the plurality of channels to be transmitted include at least one uplink channel and at least one downlink channel, the first channel set includes a first uplink channel set and a first downlink channel set, the first uplink channel set includes the at least one uplink channel, and the first downlink channel set includes the at least one downlink channel;
determining the second channel set based on the first channel set comprises:
determining a second uplink channel set based on the first uplink channel set, wherein uplink channels of the second uplink channel set do not overlap in time domain;
determining a second downlink channel set based on the first downlink channel set, wherein downlink channels of the second downlink channel set do not overlap in time domain; and
determining the second channel set based on the second uplink channel set and the second downlink channel set.

6. The method according to claim 5, wherein determining the second uplink channel set based on the first uplink channel set comprises:
repeatedly performing a second processing operation on the first uplink channel set until a second preset condition is met, to obtain the second uplink channel set;
wherein the second processing operation comprises: adding a uplink channel with a highest priority from the first uplink channel set to the second uplink channel set; and deleting the uplink channel with the highest priority and other uplink channels that overlap with the uplink channel with the highest priority in time domain from the first uplink channel set, to obtain an updated first uplink channel set;
wherein the second preset condition comprises: the updated first uplink channel set being an empty set.

7. The method according to claim 5, wherein determining the second downlink channel set based on the first downlink channel set comprises:
addressing, agreed by a base station and a terminal, a time domain overlap caused by a downlink channel with repetition of the first downlink channel set, to obtain a first sub downlink channel set; addressing a time domain overlap caused by a downlink channel without repetition of the first downlink channel set, to obtain a second sub downlink channel set; and addressing a time domain overlap caused by a downlink channel of the first sub downlink channel set and the second sub downlink channel set, to obtain the second downlink channel set.

8. The method according to claim 5, wherein determining the second downlink channel set based on the first downlink channel set comprises:
repeatedly performing a third processing operation on the first downlink channel set until a third preset condition is met, to obtain the second downlink channel set;
wherein the third processing operation comprises: adding a downlink channel with a highest priority from the first downlink channel set to the second downlink channel set; and deleting the downlink channel with the highest priority and other downlink channels that overlap with the downlink channel with the highest priority in time domain from the first downlink channel set, to obtain an updated first downlink channel set;
wherein the third preset condition comprises: the updated first downlink channel set being an empty set.

9. The method according to claim 5, wherein determining the second channel set based on the second uplink channel set and the second downlink channel set comprises:
forming a third channel set consisting of the second uplink channel set and the second downlink channel set, wherein the third channel set comprises at least one channel to be transmitted;
repeatedly performing a fourth processing operation on the third channel set until a fourth preset condition is met, to obtain the second channel set; wherein the fourth processing operation comprises: adding a channel to be transmitted with a highest priority from the third channel set to the second channel set; and deleting the channel to be transmitted with the highest priority and other channels to be transmitted that overlap with the channel to be transmitted with the highest priority in time domain from the third channel set, to obtain an updated third channel set .

10. The method according to claim 9, wherein the fourth preset condition comprises at least one of:
the updated third channel set being an empty set;
a number of channels to be transmitted in the second channel set reaching a preset number; or
a frequency of uplink-downlink switches in a slot determined based on the second channel set reaching a preset frequency.

11. The method according to any one of claims 3 to 10, wherein apriority of a channel to be transmitted is determined based on at least one of:
whether the channel to be transmitted being with repetition;
a transmission direction of the channel to be transmitted;
a channel type of the channel to be transmitted;
a starting symbol of the channel to be transmitted in a slot;
a number of symbols occupied by the channel to be transmitted in a slot; or
a starting slot of the channel to be transmitted.

12. The method according to any one of claims 3 to 10, wherein in response to that a gap between an ending symbol of a PDCCH corresponding to a dynamic grant PDSCH and a starting symbol of a configured grant PUSCH is greater than or equal to a preset gap, a priority of the dynamic grant PDSCH is higher than a priority of the configured grant PUSCH; otherwise, the priority of the dynamic grant PDSCH is lower than the priority of the configured grant PUSCH.

13. The method according to any one of claims 3 to 10, wherein in response to that a gap between an ending symbol of a PDCCH corresponding to a dynamic grant PDSCH and a starting symbol of a semi-persistently scheduled PDSCH is greater than or equal to a preset gap, a priority of the dynamic grant PDSCH is higher than a priority of the semi-persistently scheduled PDSCH; otherwise, the priority of the dynamic grant PDSCH is lower than the priority of the semi-persistently scheduled PDSCH.

14. The method according to any one of claims 3 to 10, wherein in response to that a gap between an ending symbol of a PDCCH corresponding to a dynamic grant PUSCH and a starting symbol of a semi-persistently scheduled PDSCH is greater than or equal to a preset gap, a priority of the dynamic grant PUSCH is higher than a priority of the semi-persistently scheduled PDSCH; otherwise, the priority of the dynamic grant PUSCH is lower than the priority of the semi-persistently scheduled PDSCH.

15. The method according to any one of claims 3 to 10, wherein among a plurality of semi-persistently scheduled PDSCHs, a semi-persistently scheduled PDSCH with a smallest index has a highest priority.

16. The method according to claim 1, further comprising:
in response to that there are a plurality of channels to be transmitted with a same priority and overlapping in time domain in the first channel set, stopping transmitting the plurality of channels to be transmitted with the same priority and overlapping in time domain.

17. The method according to claim 1, wherein the device is a base station or a terminal.

18. A communication apparatus, comprising: a memory and a processor, wherein the memory is coupled to the processor, the memory is configured to store instructions executable for the processor, and the processor is configured, upon the instructions being executed, to perform the method according to any one of claims 1 to 17.

19. A computer-readable storage medium, wherein computer instructions are stored on the computer-readable storage medium, in response to that the computer instructions are executed on a communication apparatus, the communication apparatus is enabled to perform the method according to any one claims 1 to 17.
